# EUROPEAN PATENT APPLICATION

(11) **EP 4 827 007 A1**
(43) Date of publication of application: **21.10.2026**
(21) Application number: 24911362.2
(22) Date of filing: 26.12.2024
(51) Int. Cl.: H04B 7/06

(54) **BEAMFORMING METHOD AND COMMUNICATION APPARATUS**

(30) Priority: 29.12.2023 CN 202311863464
(71) Applicant: Huawei Technologies Co., Ltd., Shenzhen, Guangdong 518129 (CN)
(72) Inventor: LING, Cen, Shenzhen, Guangdong 518129 (CN); QIN, Qibo, Shenzhen, Guangdong 518129 (CN); XIAO, Chaokun, Shenzhen, Guangdong 518129 (CN); ZHAI, Bangzhao, Shenzhen, Guangdong 518129 (CN)
(74) Representative: Huawei European IPR
(86) International application number: PCT/CN2024/142847
(87) International publication number: WO 2025/140441

(57) **Abstract**

The embodiments of the present application disclose a beamforming method and a communication apparatus, relating to the field of communication technologies, capable of suppressing a beam squint effect under a large bandwidth, and improving channel capacity. The method is: a network device receives first indication information, where the first indication information is used to indicate a spatial domain basis of each subband in at least one subband in a wideband, or the first indication information is used to indicate beam information of each subband in at least one subband in the wideband. The network device performs beamforming according to spatial domain bases or beam information respectively corresponding to a plurality of subbands of the bandwidth, where the spatial domain bases respectively corresponding to the plurality of subbands are determined according to the spatial domain basis of each subband in the at least one subband, and the beam information respectively corresponding to the plurality of subbands is determined according to the beam information of each subband in the at least one subband. The embodiments of the present application are used in a beamforming process.

## Description

This application claims priority to Chinese Patent Application No. 202311863464.0, filed with the China National Intellectual Property Administration on December 29, 2023, and entitled "A Beamforming Method and a Communication Apparatus," the entire contents of which are incorporated herein by reference.

### TECHNICAL FIELD

The present application relates to the field of communication technologies, and in particular, to a beamforming method and a communication apparatus.

### BACKGROUND

Under a relatively large bandwidth, the network side can perform beamforming according to a precoding matrix indicated by a precoding matrix indicator (PMI) fed back from the terminal side. Wherein, the precoding matrix is related to a spatial domain basis, a frequency domain basis, and a combination coefficient. The spatial domain basis is fed back on a per-bandwidth basis, that is, all subbands in the wideband share one set of wideband bases. This leads to a situation where, when the multipath angles observed at different subcarriers/subbands/frequency points in the wideband are different, beamforming is still performed according to the shared wideband bases. In this situation, different subcarriers/subbands/frequency points all perform beamforming according to the multipath angle of the center frequency point, and the beam directions observed at different subcarriers/subbands/frequency points are different, that is, the beam direction varies with the frequency point, causing beam squint, which will significantly reduce channel capacity.

### SUMMARY

Embodiments of the present application provide a beamforming method and a communication apparatus, which can suppress the beam squint effect under a large bandwidth and improve channel capacity.

A first aspect provides a beamforming method. Optionally, the execution entity of the method can be a network device, or can be a component or apparatus applied to a network device (e.g., a processor, a chip, or a chip system, etc.), or can be a logic module or software capable of implementing all or part of the functions of a network device. The method comprises: receiving first indication information, the first indication information being used to indicate a spatial domain basis of each subband in at least one subband in a wideband; performing beamforming according to spatial domain bases respectively corresponding to a plurality of subbands of the wideband, the spatial domain bases respectively corresponding to the plurality of subbands being determined according to the spatial domain basis of each subband in the at least one subband.

Wherein, the spatial domain basis can be angle information corresponding to a subband or distance information between a network device and a terminal device, etc. The method can be applied to a process in which a network device performs beamforming according to a precoding matrix indicator (PMI) fed back from a terminal device.

Thus, when performing PMI feedback, the present application can report a spatial domain basis on a per-subband basis for a bandwidth under the same component carrier (CC). In this way, the spatial domain basis corresponding to each subband in the wideband can be determined according to the reported spatial domain basis corresponding to the subbands, and beamforming is performed according to the spatial domain basis corresponding to each subband. This takes into account that, under the wideband of the same CC, when the multipath angles of different subbands are different, the spatial domain bases corresponding to different subbands are not entirely the same. If beamforming is performed according to the spatial domain basis corresponding to each subband, this is equivalent to considering the problem that, due to different array factors at different frequency points, that is, different gains at different horizontal angles at different frequency points, the multipath angles of electromagnetic waves of beams at different frequency points are different (the spatial domain bases are different), which results in different effects of beam squint (different beam directions) on different frequency points. Moreover, for a base station, such changes in beam squint cannot be known in advance. Compared with the existing problem of large beam angle differences, relatively severe beam squint, and low channel capacity caused by performing beamforming according to a wideband spatial domain basis under the same wideband, the present application can suppress the effects brought by beam squint and improve channel capacity.

In a possible design, the first indication information comprises an index of the spatial domain basis corresponding to each subband in the at least one subband. In this way, when the network device obtains the index of the spatial domain basis corresponding to each subband in the at least one subband in the wideband, the network device can determine, according to the index, the spatial domain basis corresponding to each subband in the at least one subband, thereby performing beamforming according to the spatial domain basis of each subband, and suppressing the problem of large beam angle differences and relatively severe beam squint caused by performing beamforming according to a wideband spatial domain basis.

In a possible design, the first indication information comprises a bitmap indicating the at least one subband and an index of the spatial domain basis corresponding to each subband in the at least one subband. This is equivalent to the terminal device informing the network device, via the bitmap, of which subbands' spatial domain basis indices are reported, and the index of the spatial domain basis corresponding to each of these subbands. In this way, the network device can perform beamforming according to the spatial domain basis of each subband, thereby suppressing the problem of large beam angle differences and relatively severe beam squint caused by performing beamforming according to a wideband spatial domain basis.

In a possible design, before receiving the first indication information, the method further comprises: sending second indication information, the second indication information being used to indicate the terminal device to report the index of the spatial domain basis of each subband in the at least one subband. That is, the network device can proactively inquire the terminal device to report the index of the spatial domain basis of each subband in the at least one subband.

In a possible design, before receiving the first indication information, the method further comprises: sending third indication information, the third indication information being used to indicate the terminal device to report the index of the spatial domain basis corresponding to each subband in the at least one subband when it is determined that a subband increment corresponding to the at least one subband is greater than or equal to an increment threshold; wherein the subband increment is a difference between the indices of the spatial domain bases of a first subband and a second subband in the wideband, or the subband increment is a difference between the multipath angles of a first subband and a second subband in the wideband, or the subband increment is a difference between the absolute values of coefficients of a first subband and a second subband in the wideband at the same angle. This takes into account that, between adjacent subbands, if the difference between the indices of the spatial domain bases of the subbands is small, or the difference between the multipath angles is small, or the difference between the absolute values of coefficients at the same angle is small, the same spatial domain basis can be used for beamforming, and the beam angle difference is not large. In this way, signaling overhead between the network device and the terminal device is saved.

In a possible design, the first indication information is used to indicate a functional relationship of the index of the spatial domain basis of the at least one subband varying with subband position and parameters of the functional relationship. In this way, when the network device knows the position of each subband in the at least one subband, the network device can determine, according to the functional relationship and the parameters of the functional relationship, the index of the spatial domain basis of each subband in the at least one subband, thereby determining the spatial domain basis of each subband in the at least one subband according to the index.

In a possible design, before receiving the first indication information, the method further comprises: sending fourth indication information, the fourth indication information being used to indicate the terminal device to report a functional relationship of the spatial domain basis of the at least one subband varying with subband position and parameters of the functional relationship. That is, the network device can proactively inquire the terminal device about the spatial domain basis corresponding to each subband in the at least one subband, the spatial domain basis being determined according to the reported functional relationship of the spatial domain basis varying with subband position and the parameters of the functional relationship, so that the network device performs beamforming according to the spatial domain basis of each subband, thereby suppressing the problem of large beam angle differences and relatively severe beam squint caused by performing beamforming according to a wideband spatial domain basis.

In a possible design, before receiving the first indication information, the method further comprises: sending an inquiry message, the inquiry message being used to inquire whether the terminal device has the capability of reporting the index of the spatial domain basis on a per-subband basis; receiving a response message, the response message being used to indicate that the terminal device has the capability of reporting the index of the spatial domain basis on a per-subband basis. In this way, for a terminal device having the capability of reporting the index of the spatial domain basis on a per-subband basis, when the terminal device reports the index of the spatial domain basis on a per-subband basis, the network device can perform beamforming according to the spatial domain basis of each subband, thereby suppressing the problem of large beam angle differences and relatively severe beam squint caused by performing beamforming according to a wideband spatial domain basis.

In a possible design, the at least one subband comprises a subband of a center frequency point, a subband of a maximum frequency point, and a subband of a minimum frequency point in the wideband. This design can be understood as a default reporting configuration, that is, the terminal device does not need to report the spatial domain basis of each subband in the wideband to the network device. When the terminal device reports the spatial domain bases of some subbands, the network device can deduce the spatial domain bases of other subbands in the wideband according to the reported spatial domain bases of the some subbands, and the signaling overhead of the terminal device is relatively small.

In a possible design, performing beamforming according to the spatial domain bases respectively corresponding to the plurality of subbands of the wideband comprises: determining, according to the spatial domain bases respectively corresponding to the plurality of subbands, weights respectively corresponding to the plurality of subbands for beamforming; performing beamforming according to the weight corresponding to each subband in the plurality of subbands. In this way, compared with the relatively severe beam squint problem caused by performing beamforming according to a wideband spatial domain basis, in the present application, the network device can determine weights for beamforming according to the spatial domain basis corresponding to each subband, and perform coherent superposition of beams in the same direction according to the weights corresponding to different subbands, to obtain beams under the plurality of subbands. The present application takes into account the problem that the multipath angles of electromagnetic waves of beams at different frequency points are different (the spatial domain bases are different), which results in different effects of beam squint (different beam directions) on different frequency points, that is, the present application can suppress the effects brought by beam squint and improve channel capacity.

A second aspect provides a beamforming method. Optionally, the execution entity of the method can be a terminal device, or can be a component or apparatus applied to a network device (e.g., a processor, a chip, or a chip system, etc.), or can be a logic module or software capable of implementing all or part of the functions of a terminal device. The method comprises: sending first indication information, the first indication information being used to indicate a spatial domain basis of each subband in at least one subband in a wideband; receiving a beam transmitted on the wideband, the beam being obtained by performing beamforming according to spatial domain bases respectively corresponding to a plurality of subbands of the bandwidth, the spatial domain bases respectively corresponding to the plurality of subbands being determined according to the spatial domain basis of each subband in the at least one subband.

The beneficial effects of the second aspect can be found in the description of the first aspect.

In a possible design, the first indication information comprises an index of the spatial domain basis corresponding to each subband in the at least one subband.

In a possible design, before sending the first indication information, the method further comprises: receiving second indication information, where the second indication information is used to instruct the terminal device to report an index of a spatial domain basis of each subband in the at least one subband.

In a possible design, the first indication information comprises a bitmap indicating the at least one subband and an index of the spatial domain basis corresponding to each subband in the at least one subband.

In a possible design, before sending the first indication information, the method further comprises: receiving third indication information, the third indication information being used to instruct the terminal device, when determining that a subband increment corresponding to at least one subband is greater than or equal to an increment threshold, to report an index of a spatial domain basis corresponding to each subband in the at least one subband; wherein the subband increment is a difference between indexes of spatial domain bases of a first subband and a second subband in a wideband, or the subband increment is a difference between multipath angles of the first subband and the second subband in the wideband, or the subband increment is a difference between absolute values of coefficients of the first subband and the second subband in the wideband at a same angle.

In a possible design, the first indication information is used to indicate a functional relationship of an index of a spatial domain basis of the at least one subband varying with a position of the subband and a parameter of the functional relationship.

In a possible design, before sending the first indication information, the method further comprises: receiving fourth indication information, the fourth indication information being used to instruct the terminal device to report a functional relationship of a spatial domain basis of the at least one subband varying with a position of the subband and a parameter of the functional relationship.

In a possible design, before sending the first indication information, the method further comprises: receiving an inquiry message, the inquiry message being used to inquire whether the terminal device has a capability of reporting an index of a spatial domain basis per subband; and sending a response message, the response message being used to indicate that the terminal device has the capability of reporting the index of the spatial domain basis per subband.

In a possible design, the at least one subband comprises a subband of a center frequency point, a subband of a maximum frequency point, and a subband of a minimum frequency point in the wideband.

In a third aspect, a beamforming method is provided. Optionally, an execution body of the method may be a network device, or may be a component or apparatus (e.g., a processor, a chip, or a chip system, etc.) applied to the network device, or may be a logic module or software capable of implementing all or part of functions of the network device. The method comprises: receiving first indication information, the first indication information being used to indicate beam information of each subband in at least one subband in a wideband; and performing beamforming according to beam information respectively corresponding to a plurality of subbands of the wideband, the beam information respectively corresponding to the plurality of subbands being determined according to the beam information of each subband in the at least one subband.

In this way, compared to the relatively severe beam squint problem caused by performing beamforming according to an optimal beam identifier of a full band corresponding to the entire carrier aggregation (CA), in the present application, the network device can perform beamforming according to a beam corresponding to each subband. The present application takes into account the problem that electromagnetic waves of beams at different frequency points have different multipath angles (different optimal beams), thereby causing different effects of beam squint on different frequency points (different beam directions), i.e., the present application can suppress the effect caused by beam squint and improve channel capacity.

In a possible design, the first indication information comprises an optimal beam identifier corresponding to each subband in the at least one subband. In this way, when the network device performs beamforming according to the optimal beam corresponding to each subband, the problem of beam squint existing in subbands at non-center frequency points due to different multipath angles of different subbands can be suppressed.

In a possible design, the first indication information comprises a bitmap of the at least one subband and an optimal beam identifier corresponding to each subband in the at least one subband. In this way, when the network device knows the optimal beam corresponding to each subband and performs beamforming, the problem of beam squint existing in subbands at non-center frequency points due to different multipath angles of different subbands can be suppressed.

In a possible design, before receiving the first indication information, the method further comprises: sending second indication information, the second indication information being used to instruct the terminal device to report beam information corresponding to each subband in the at least one subband. That is, the network device can actively instruct the terminal device to report an optimal beam per subband, so as to perform subband-level beamforming.

In a possible design, before receiving the first indication information, the method further comprises: sending an inquiry message, the inquiry message being used to inquire whether the terminal device has a capability of reporting beam information per subband; and receiving a response message, the response message being used to indicate that the terminal device has the capability of reporting beam information per subband. In this way, for a terminal device having the capability of reporting beam information per subband, when the terminal device reports the beam information per subband, the network device can perform beamforming according to the beam information of each subband, thereby suppressing the problem of large beam angle differences and relatively severe beam squint caused by performing beamforming according to beam information of the wideband.

In a fourth aspect, a beamforming method is provided. Optionally, an execution body of the method may be a terminal device, or may be a component or apparatus (e.g., a processor, a chip, or a chip system, etc.) applied to a network device, or may be a logic module or software capable of implementing all or part of functions of the terminal device. The method comprises: sending first indication information, the first indication information being used to indicate beam information of each subband in at least one subband in a wideband; and receiving a beam sent on the wideband, the beam being obtained by performing beamforming according to beam information respectively corresponding to a plurality of subbands of the wideband, the beam information respectively corresponding to the plurality of subbands being determined according to the beam information of each subband in the at least one subband.

The beneficial effects of the fourth aspect can be found in the description of the third aspect.

In a possible design, the first indication information comprises an optimal beam identifier corresponding to each subband in the at least one subband.

In a possible design, the first indication information comprises a bitmap of the at least one subband and an optimal beam identifier corresponding to each subband in the at least one subband.

In a possible design, before sending the first indication information, the method further comprises: receiving second indication information, the second indication information being used to instruct the terminal device to report beam information corresponding to each subband in the at least one subband.

In a possible design, before sending the first indication information, the method further comprises: receiving an inquiry message, the inquiry message being used to inquire whether the terminal device has a capability of reporting beam information per subband; and sending a response message, the response message being used to indicate that the terminal device has the capability of reporting beam information per subband.

In a fifth aspect, a communication apparatus is provided, comprising: a receiving module, configured to receive first indication information, the first indication information being used to indicate a spatial domain basis of each subband in at least one subband in a wideband; and a processing module, configured to perform beamforming according to a spatial domain basis respectively corresponding to a plurality of subbands of the wideband, the spatial domain basis respectively corresponding to the plurality of subbands being determined according to the spatial domain basis of each subband in the at least one subband.

In a possible design, the first indication information comprises an index of a spatial domain basis corresponding to each subband in the at least one subband.

In a possible design, the first indication information comprises a bitmap indicating the at least one subband and an index of a spatial domain basis corresponding to each subband in the at least one subband.

In a possible design, further comprising a sending module, configured to send second indication information, where the second indication information is used to instruct the terminal device to report an index of a spatial domain basis of each subband in the at least one subband.

In a possible design, the communication apparatus further comprises a sending module, configured to send third indication information, the third indication information being used to instruct a terminal device to report, when it is determined that a subband increment corresponding to at least one subband is greater than or equal to an increment threshold, an index of a spatial domain basis corresponding to each subband of the at least one subband; wherein the subband increment is a difference between indexes of spatial domain bases of a first subband and a second subband in a wideband, or the subband increment is a difference between multipath angles of a first subband and a second subband in a wideband, or the subband increment is a difference between absolute values of coefficients of a first subband and a second subband in a wideband at the same angle.

In a possible design, the first indication information is used to indicate a functional relationship of variations of the index of the spatial domain basis of the at least one subband with the position of the subband, and parameters of the functional relationship.

In a possible design, the communication apparatus further comprises a sending module, configured to send fourth indication information, the fourth indication information being used to instruct a terminal device to report a functional relationship of variations of the spatial domain basis of the at least one subband with the position of the subband, and parameters of the functional relationship.

In a possible design, the communication apparatus further comprises: a sending module, configured to send an inquiry message, the inquiry message being used to inquire whether a terminal device has a capability of reporting the index of the spatial domain basis on a per-subband basis; and the receiving module, further configured to receive a response message, the response message being used to indicate that the terminal device has the capability of reporting the index of the spatial domain basis on a per-subband basis.

In a possible design, the at least one subband comprises a subband at a center frequency point, a subband at a maximum frequency point, and a subband at a minimum frequency point in the wideband.

In a possible design, the processing module is configured to: determine, according to the spatial domain bases respectively corresponding to a plurality of subbands, weights respectively corresponding to the plurality of subbands and used for beamforming; and perform beamforming according to the weights corresponding to each subband of the plurality of subbands.

In a sixth aspect, provided is a communication apparatus, comprising: a sending module, configured to send first indication information, the first indication information being used to indicate a spatial domain basis of each subband of at least one subband in a wideband; and a receiving module, configured to receive a beam transmitted on the wideband, the beam being obtained by performing beamforming according to the spatial domain bases respectively corresponding to a plurality of subbands of the wideband, the spatial domain bases respectively corresponding to the plurality of subbands being determined according to the spatial domain basis of each subband of the at least one subband.

In a possible design, the first indication information comprises an index of the spatial domain basis corresponding to each subband of the at least one subband.

In a possible design, the receiving module is further configured to receive second indication information, the second indication information being used to instruct a terminal device to report the index of the spatial domain basis of each subband of the at least one subband.

In a possible design, the first indication information comprises a bitmap indicating the at least one subband and the index of the spatial domain basis corresponding to each subband of the at least one subband.

In a possible design, the receiving module is further configured to receive third indication information, the third indication information being used to instruct a terminal device to report, when it is determined that a subband increment corresponding to at least one subband is greater than or equal to an increment threshold, the index of the spatial domain basis corresponding to each subband of the at least one subband; wherein the subband increment is a difference between indexes of spatial domain bases of a first subband and a second subband in a wideband, or the subband increment is a difference between multipath angles of a first subband and a second subband in a wideband, or the subband increment is a difference between absolute values of coefficients of a first subband and a second subband in a wideband at the same angle.

In a possible design, the first indication information is used to indicate a functional relationship of variations of the index of the spatial domain basis of the at least one subband with the position of the subband, and parameters of the functional relationship.

In a possible design, the receiving module is further configured to receive fourth indication information, the fourth indication information being used to instruct a terminal device to report a functional relationship of variations of the spatial domain basis of the at least one subband with the position of the subband, and parameters of the functional relationship.

In a possible design, the receiving module is further configured to receive an inquiry message, the inquiry message being used to inquire whether a terminal device has a capability of reporting the index of the spatial domain basis on a per-subband basis; and the sending module is further configured to send a response message, the response message being used to indicate that the terminal device has the capability of reporting the index of the spatial domain basis on a per-subband basis.

In a possible design, the at least one subband comprises a subband at a center frequency point, a subband at a maximum frequency point, and a subband at a minimum frequency point in the wideband.

In a seventh aspect, provided is a communication apparatus, comprising: a receiving module, configured to receive first indication information, the first indication information being used to indicate beam information of each subband of at least one subband in a wideband; and a processing module, configured to perform beamforming according to the beam information respectively corresponding to a plurality of subbands of the wideband, the beam information respectively corresponding to the plurality of subbands being determined according to the beam information of each subband of the at least one subband.

In a possible design, the first indication information comprises an optimal beam identifier corresponding to each subband of the at least one subband.

In a possible design, the first indication information comprises a bitmap of the at least one subband and the optimal beam identifier corresponding to each subband of the at least one subband.

In a possible design, the communication apparatus further comprises a sending module, configured to send second indication information, the second indication information being used to instruct a terminal device to report the beam information corresponding to each subband of the at least one subband.

In a possible design, the communication apparatus further comprises: a sending module, configured to send an inquiry message, the inquiry message being used to inquire whether a terminal device has a capability of reporting beam information on a per-subband basis; and the receiving module, further configured to receive a response message, the response message being used to indicate that the terminal device has the capability of reporting beam information on a per-subband basis.

According to an eighth aspect, a communication apparatus is provided, comprising: a sending module, configured to send first indication information, the first indication information being used to indicate beam information of each subband in at least one subband in a wideband; and a receiving module, configured to receive a beam sent on the wideband, the beam being obtained by performing beamforming according to beam information respectively corresponding to a plurality of subbands of a bandwidth, and the beam information respectively corresponding to the plurality of subbands being determined according to the beam information of each subband in the at least one subband.

In a possible design, the first indication information comprises an optimal beam identifier corresponding to each subband in the at least one subband.

In a possible design, the first indication information comprises a bitmap of the at least one subband and an optimal beam identifier corresponding to each subband in the at least one subband.

In a possible design, the receiving module is further configured to receive second indication information, the second indication information being used to instruct a terminal device to report beam information corresponding to each subband in the at least one subband.

In a possible design, the receiving module is further configured to: receive an inquiry message, the inquiry message being used to inquire whether the terminal device has a capability of reporting beam information per subband; and the sending module is further configured to send a response message, the response message being used to indicate that the terminal device has the capability of reporting beam information per subband.

According to a ninth aspect, a communication apparatus is provided, the communication apparatus comprising a processor and a memory, the memory being used to store computer-executable instructions, and when the computer-executable instructions are run by the processor, the methods of the first aspect to the fourth aspect and any possible design of the first aspect to the fourth aspect are executed.

According to a tenth aspect, a computer-readable storage medium is provided, the computer-readable storage medium having computer instructions stored therein, and when the computer instructions are run on a communication apparatus, the communication apparatus is caused to execute the methods described in the first aspect to the fourth aspect and any possible design of the first aspect to the fourth aspect.

According to an eleventh aspect, a computer program product is provided, comprising computer instructions, and when the computer instructions are run on a communication apparatus, the communication apparatus is caused to execute the methods described in the first aspect to the fourth aspect and any possible design of the first aspect to the fourth aspect.

According to a twelfth aspect, a communication system is provided, the communication system comprising a first communication apparatus and a second communication apparatus, the first communication apparatus being usable to execute the methods described in the first aspect and the third aspect and any possible design of the first aspect and the third aspect, and the second communication apparatus being usable to execute the methods described in the second aspect and the fourth aspect and any possible design of the second aspect and the fourth aspect.

### BRIEF DESCRIPTION OF DRAWINGS

FIG. 1 is a schematic diagram of a beam squint phenomenon provided by an embodiment of the present application;
FIG. 2 is a schematic diagram of array factors at different frequency points and different horizontal angles in a MIMO technology provided by an embodiment of the present application;
FIG. 3 is a schematic architectural diagram of a communication system provided by an embodiment of the present application;
FIG. 4 is a schematic diagram of beam offset (angle deviation) at different desired beam angles provided by an embodiment of the present application;
FIG. 5 is a schematic flowchart of a beamforming method provided by an embodiment of the present application;
FIG. 6 is a schematic diagram of a protocol layer framework of a base station and a UE provided by an embodiment of the present application;
FIG. 7 is a schematic flowchart of a beamforming method provided by an embodiment of the present application;
FIG. 8 is a schematic flowchart of a beamforming method provided by an embodiment of the present application;
FIG. 9 is a schematic flowchart of a beamforming method provided by an embodiment of the present application;
FIG. 10 is a schematic flowchart of a beamforming method provided by an embodiment of the present application;
FIG. 11 is a schematic flowchart of a beamforming method according to an embodiment of the present application;
FIG. 12 is a schematic diagram of channel capacity under different ratios of bandwidth to center frequency point according to an embodiment of the present application;
FIG. 13 is a schematic structural diagram of a communication apparatus according to an embodiment of the present application;
FIG. 14 is a schematic structural diagram of a communication apparatus according to an embodiment of the present application.

### DESCRIPTION OF EMBODIMENTS

For ease of understanding, explanations of some concepts related to the embodiments of the present application are provided for reference as follows.

Beam squint: means that under a relatively large bandwidth, the directions of beams observed at different subcarriers/subbands/frequency points are different. Beam squint may also be referred to as beam dispersion. The cause of this beam squint phenomenon is that the multipath angles observed at different subbands/subcarriers/frequency points are different.

Multipath angle: In a mobile propagation environment, the signal received by a receiver is not from a single path, but is a synthesis of numerous reflected waves from many paths, and this phenomenon is called the multipath effect. That is, in a wireless channel, there is not merely one path between a transmitter and a receiver, but there are reflection paths with different amplitudes, phases, delays, and angles of arrival, resulting in a time-dispersed signal in the time domain. Moreover, the angle at which the channel of each path arrives at the receiver is different, and the angles at which signals of multiple paths arrive at the receiver can be understood as multipath angles.

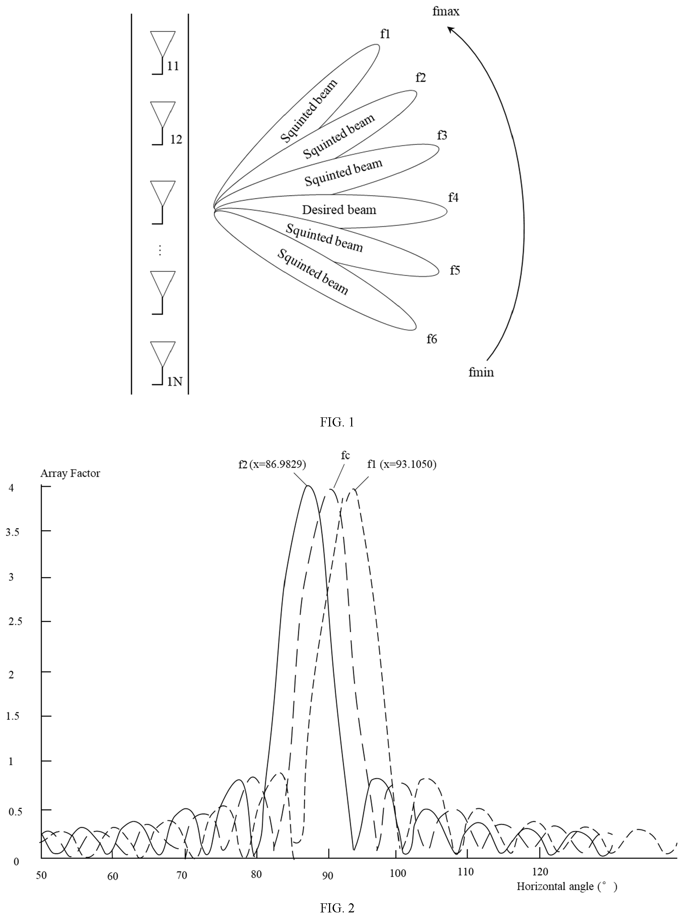

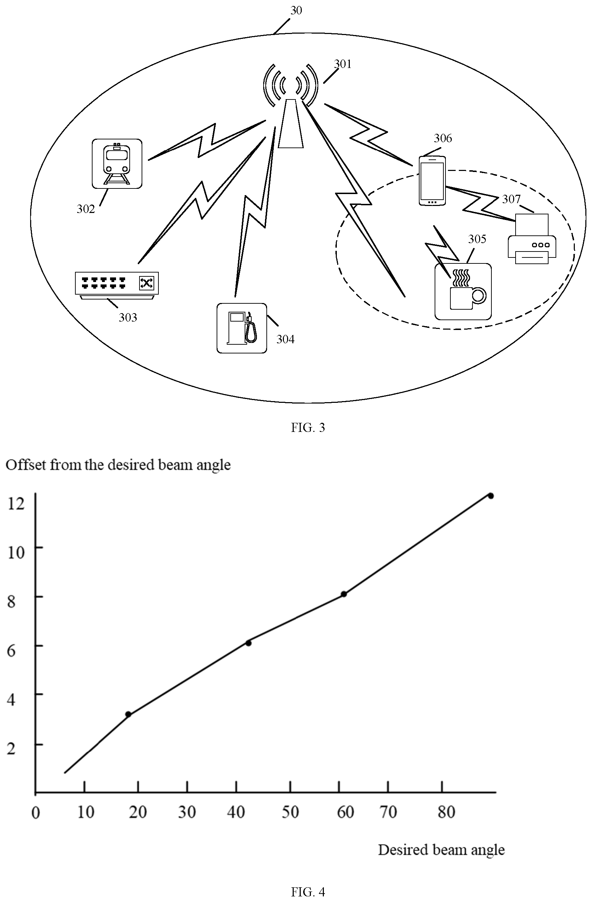

The beam squint phenomenon is described below with reference to FIG. 1. FIG. 1 shows a schematic diagram of a beam squint phenomenon. The root cause is that the occurrence of beam squint is actually due to the fact that the multipath angles of beams observed at different subbands/subcarriers/frequency points are different, or in other words, the directions of beams after beamforming at different subbands/subcarriers/frequency points are different. For example, FIG. 1 shows that a base station has a massive Multiple Input Multiple Output (MIMO) antenna array, comprising N antenna elements: antenna elements 11 to 1N, the frequency points of the bandwidth comprise f6 to f1, and the frequency values of frequency points f6 to f1 gradually decrease. The base station performs beamforming according to the multipath angle of the center frequency point f4. However, the multipath angles corresponding to frequency points f1, f2, f3, f5, and f6 are different; if frequency points f1, f2, f3, f5, and f6 respectively perform beamforming according to the multipath angle observed at frequency point f4, multiple squinted beams will be formed. That is, in FIG. 4, the beam formed by the center frequency point f4 is the desired beam, and the beams formed by frequency points f1, f2, f3, f5, and f6 are all squinted beams caused by the beam squint phenomenon.

FIG. 2 is a schematic diagram of array factors at different frequency points and different horizontal angles in a MIMO technology, wherein the horizontal axis represents the horizontal angle (azimuth angle) x, the vertical axis represents the array factor (array factor) y, and the illustration is shown by taking a uniform linear array (ULA) with a center frequency point fc of 6.5 GHz, a bandwidth of 400 M, and an array configuration of 16T (16 antenna elements) as an example. Wherein, the array factor is expressed as:
$g \left(ξψ-{ψ}_{F}\right) ,$ Formula(1)

Wherein, ξ=f/fc represents a sub-frequency point function, *ψ_{F}* represents the angle of current beam pointing, and *ψ* represents the horizontal angle of the frequency point. The array can be understood as an antenna array, and the array factor is a measure of the degree to which a specific characteristic changes due to grouping. In the antenna array, the array factor can be understood as the gain at different frequency points and different horizontal angles calculated under this array configuration, and the gain is used for beamforming.

The calculation formula of the steering vector is expressed as:
${β}_{n} \left({ψ}_{F}\right) = 2 {πλ}^{- 1} \left(n-1\right) {dψ}_{F} ,$ Formula(2)

Wherein, *βₙ* represents the steering vector, *λ* represents the wavelength, *ψ_{F}* represents the angle of current beam pointing, *d* represents the antenna spacing, the value range of n is [1, N], and N is an integer representing the number of antenna elements.

According to Formula (1) and Formula (2), the array factor g(x) can be derived and expressed as:
$g \left(x\right) = \frac{sin \left(\frac{Nπx}{2}\right)}{\sqrt{N} sin \left(\frac{πx}{2}\right)} {e}^{j \frac{\left(N-1\right) πx}{2}} ,$ Formula(3) Wherein, x represents the horizontal angle of the frequency point.

It can be found from FIG. 2 that the beam pointing angles *ψ_{F}* of different frequency points f1, fc, and f2 are different, and the horizontal angles x of the frequency points are different; for example, the difference between the horizontal angles x of frequency points f1 and f2 is greater than 7 degrees (93.1059-86.9829). In this case, the array factors of different frequency points are different, that is, the gains at different frequency points and different horizontal angles are different, which causes the multipath angles of the electromagnetic waves of the beams of different frequency points to be different, thereby resulting in different impacts of beam squint on different frequency points (different beam pointing directions). However, for the base station, it is impossible to know such changes in beam squint in advance.

Beamforming: By adjusting the amplitude and phase of multiple antennas, a specific shape and direction are imparted to the antenna radiation pattern, so that the wireless signal energy is concentrated in a narrower beam, to enhance coverage and reduce interference.

Beam management: To ensure continuous seamless coverage, the base station side needs to transmit multiple beams in different directions as much as possible. To manage multiple beams, beam management techniques are required. Beam management mainly comprises four steps: 1) Beam sweeping, that is, within the beam coverage range, a set of beams are transmitted and received according to predefined time intervals and directions. 2) Beam measurement, that is, evaluating the quality of received signals, where the evaluation metrics include reference signal receiving power (RSRP), reference signal received quality (RSRQ), signal to interference plus noise ratio (SINR), and the like. 3) Beam determination, that is, selecting an optimal beam (or beam group) based on beam measurement. 4) Beam reporting, that is, the terminal reports beam quality and beam determination information to the base station, to establish beam directional communication between the base station and the terminal.

Common beam management (CBM): In a multi-carrier system in the millimeter wave frequency band, it is mainly divided into intra-band carrier aggregation (CA) and inter-band carrier aggregation. For intra-band carrier aggregation, multiple carriers share one radio frequency channel, and therefore, the terminal only supports CBM, and can use a common beam for signal transmission.

Independent beam management (IBM): That is, each frequency band separately selects a beam for signal transmission. For inter-band carrier aggregation, the terminal may support CBM or IBM between two or more frequency bands, and a terminal with strong capability may also support both IBM and CBM simultaneously.

Precoding matrix indicator (PMI), which can be used to indicate a precoding matrix, and the network device recovers the precoding matrix based on the PMI. Wherein, the precoding matrix may be a precoding matrix determined by the terminal device based on the channel matrix of each frequency domain unit. The frequency domain unit, i.e., a unit of frequency domain resources, can represent different frequency domain resource granularities.

Spatial domain vector, or referred to as beam vector, spatial domain beam basis vector, or spatial domain basis vector, or spatial domain basis. Each element in the spatial domain vector can represent the weight of each antenna port. Based on the weights of the respective antenna ports represented by the respective elements in the spatial domain vector, linear superposition of the signals of the respective antenna ports is performed, so that a region with relatively strong signals can be formed in a certain direction in space.

The frequency domain vector, which may also be referred to as a frequency domain basis, may be used to represent a vector of a variation pattern of a channel in the frequency domain. Each frequency domain vector may represent one variation pattern. When a signal is transmitted through a wireless channel, it can arrive at a receiving antenna from a transmitting antenna via multiple paths. Multipath delay leads to frequency selective fading, which is a variation of the frequency domain channel. Therefore, different frequency domain vectors may be used to represent the variation patterns of the channel in the frequency domain caused by delays on different transmission paths.

The technical solutions in the embodiments of the present application will be described below with reference to the accompanying drawings of the embodiments of the present application. In the description of the embodiments of the present application, unless otherwise stated, "/" means "or". For example, A/B may represent A or B; "and/or" herein merely describes an association relationship between associated objects, indicating that three relationships may exist. For example, A and/or B may represent: A alone, both A and B, and B alone. In addition, in the description of the embodiments of the present application, "a plurality of" refers to two or more than two.

In the following description, the terms "first" and "second" are used for descriptive purposes only and shall not be construed as indicating or implying relative importance or implicitly indicating the number of the indicated technical features. Therefore, a feature defined with "first" or "second" may explicitly or implicitly include one or more of such features. In the description of the present embodiments, unless otherwise stated, "a plurality of" means two or more.

The embodiments of the present application may be applied to a fifth generation (5th generation, 5G) new radio (new radio, NR) system, or applied to future communication systems or other similar communication systems, so long as in the communication system there exists an entity that needs to send transmission direction indication information, and another entity that needs to receive the indication information and determine a transmission direction within a certain time according to the indication information. In addition, the technical solutions provided in the embodiments of the present application may be applied to a cellular link, a public land mobile network (public land mobile network, PLMN), a machine to machine (machine to machine, M2M) network, an internet of things (internet of things, IoT) network, or other networks. They may also be applied to links between devices, for example, a device to device (device to device, D2D) link. The D2D link may also be referred to as a sidelink, where the sidelink may also be referred to as a side link or a secondary link, etc. In the embodiments of the present application, the foregoing terms all refer to a link established between devices of the same type, and have the same meaning. The so-called devices of the same type may be a link from a terminal device to a terminal device, or a link from a base station to a base station, or a link from a relay node to a relay node, etc., and the embodiments of the present application impose no limitation thereto. For a link between a terminal device and a terminal device, there is a D2D link defined in Release (Release, Rel)-12/13 of the Third Generation Partnership Project (third generation partnership project, 3GPP), and there are also V2X links from vehicle to vehicle, vehicle to mobile phone, or vehicle to any entity defined by 3GPP for vehicle-to-everything (V2X), including Rel-14/15. It also includes V2X links based on the NR (new radio) system currently under study by 3GPP in Rel-18 and subsequent releases, etc.

FIG. 3 shows a schematic architectural diagram of a communication system 30 provided by an embodiment of the present application. The communication system 30 includes communication devices, and the communication devices may use air interface resources to perform wireless communication. The communication devices may include a network device 301 and six types of terminal devices 302 to 307 (high-speed rail equipment, a switch, gas station equipment, home appliances, a mobile terminal, and a printer) shown in FIG. 3. It should be understood that the terminal devices in FIG. 3 are merely examples, and there may be more or fewer terminal devices. The communication system 30 may also include other network devices, for example, may also include wireless relay devices and wireless backhaul devices, which are not shown in FIG. 3. The network device 301 is an access device through which the terminal device accesses a wireless network, for example, may be a base station. The network device 301 corresponds to different devices in different systems. For example, in a fourth generation mobile communication technology (4th-generation, 4G) system, it may correspond to an evolved Node B (evolutional Node B, eNB), and in a 5G system, it corresponds to a next generation Node B (generation Node B, gNB). The terminal devices 302 to 307 may also be a cellular phone or a smart phone, a portable computer, a handheld communication device, a handheld computing device, a satellite radio apparatus, a global positioning system, a personal digital assistant (personal digital assistant, PDA), and/or any other suitable device for communication over a wireless communication system, and all can be connected to the network device. The air interface resources may include at least one of time domain resources, frequency domain resources, code resources, and spatial resources. In the embodiments of the present application, "at least one" may also be described as one or more, and "a plurality of" may be two, three, four or more, and the present application imposes no limitation thereto.

The embodiments of the present application may be applicable to uplink signal transmission, may also be applicable to downlink signal transmission, and may also be applicable to D2D signal transmission. For downlink signal transmission, the sending device is a network device, and the corresponding receiving device is a terminal device; for uplink signal transmission, the sending device is a terminal device, and the corresponding receiving device is a network device; for D2D signal transmission, the sending device is a terminal device, and the receiving device is also a terminal device. For example, the three terminal devices shown in the dashed-line area of FIG. 3 may be applicable to D2D signal transmission, and the embodiments of the present application impose no limitation on the direction of signal transmission.

For example, in the communication system 30, the terminal devices 302 to 307 may send uplink data to the network device 301, and the network device 301 needs to receive the uplink data sent by the terminal devices 302 to 307. In addition, the terminal devices 305 to 307 may also form a communication system. In this communication system, the network device 301 may send downlink information to the terminal devices 302 to 304, etc.; the terminal device 306 may also send downlink information to the terminal device 305 and the terminal device 307.

The terminal device involved in the embodiments of the present application may also be referred to as a terminal, and may be a device with a wireless transceiver function, which may be deployed on land, including indoors or outdoors, handheld or vehicle-mounted; may also be deployed on water (such as on a ship, etc.); and may also be deployed in the air (such as on an airplane, a balloon, and a satellite, etc.). The terminal device may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. The terminal device may also be a virtual reality (virtual reality, VR) terminal device, an augmented reality (augmented reality, AR) terminal device, a wireless terminal in industrial control, a wireless terminal in unmanned driving, a wireless terminal in remote medical care, a wireless terminal in a smart grid, a wireless terminal in a smart city (smart city), a wireless terminal in a smart home (smart home), and so on. In the embodiments of the present application, an apparatus for implementing a function of the terminal may be a terminal; or may be an apparatus capable of supporting the terminal to implement the function, for example, a chip system, and the apparatus may be installed in the terminal. In the embodiments of the present application, the chip system may be composed of chips, or may include chips and other discrete components. In the technical solutions provided by the embodiments of the present application, the technical solutions provided by the embodiments of the present application are described by taking an example in which the apparatus for implementing the function of the terminal is a terminal and the terminal is a UE.

The network device involved in the embodiments of the present application includes an access network device, for example, a base station (base station, BS). The BS may be a device deployed in a radio access network and capable of performing wireless communication with a terminal. The base station may have various forms, such as a TRP or a gNB. The network device may be a device used for communicating with a mobile device. The network device may be an AP in a wireless local area network (WLAN), a base station (base transceiver station, BTS) in a global system for mobile communication (GSM) or code division multiple access (CDMA), or a base station (NodeB, NB) in wideband code division multiple access (WCDMA), or an evolved Node B (evolutional Node B, eNB or eNodeB) in long term evolution (LTE), or a relay station or an access point, or a vehicle-mounted device, a wearable device, and a network device in a future 5G network or a network device in a future evolved PLMN, or a gNodeB/gNB in an NR system; in some deployments, the gNB may include a centralized unit (centralized unit, CU) and a DU. The gNB may also include an active antenna unit (active antenna unit, AAU). The CU implements some functions of the gNB, and the DU implements some functions of the gNB. For example, the CU is responsible for processing non-real-time protocols and services, and implements functions of a radio resource control (radio resource control, RRC) layer and a packet data convergence protocol (packet data convergence protocol, PDCP) layer. The DU is responsible for processing physical layer protocols and real-time services, and implements functions of a radio link control (radio link control, RLC) layer, a medium access control (medium access control, MAC) layer, and a physical (physical, PHY) layer. The AAU implements some physical layer processing functions, radio frequency processing, and related functions of active antennas. Since information of the RRC layer eventually becomes information of the PHY layer, or is transformed from information of the PHY layer, under this architecture, higher layer signaling, such as RRC layer signaling, may also be considered to be sent by the DU, or sent by the DU and the AAU. It can be understood that the network device may be a device including one or more of a CU node, a DU node, and an AAU node. In addition, the CU may be classified as a network device in a radio access network (radio access network, RAN), or the CU may be classified as a network device in a core network (core network, CN), and the present application imposes no limitation thereto. Furthermore, in the embodiments of the present application, the network device provides a service for a cell, and the terminal device communicates with the network device by using transmission resources (for example, frequency domain resources, or in other words, spectrum resources) used by the cell. The cell may be a cell corresponding to the network device (for example, a base station). The cell may belong to a macro base station, or may belong to a base station corresponding to a small cell. The small cell here may include: an urban cell (Metro cell), a micro cell (Micro cell), a pico cell (Pico cell), a femto cell (Femto cell), etc. These small cells have characteristics of small coverage and low transmit power, and are suitable for providing high-rate data transmission services. In addition, in other possible cases, the network device may be another apparatus that provides a wireless communication function for a terminal device. The embodiments of the present application impose no limitation on the specific technology and specific device form adopted by the network device. For ease of description, in the embodiments of the present application, an apparatus that provides a wireless communication function for a terminal device is referred to as a network device. For example, the network device may also be an apparatus capable of supporting the network device to implement the function, for example, a chip system, and the apparatus may be installed in the network device. In the technical solutions provided by the embodiments of the present application, the technical solutions provided by the embodiments of the present application are described by taking an example in which the apparatus for implementing the function of the network device is a network device and the network device is a base station.

The technical solutions provided by the embodiments of the present application may be applied to wireless communication between communication devices. The wireless communication between the communication devices may include: wireless communication between a network device and a terminal, wireless communication between a network device and a network device, and wireless communication between a terminal and a terminal. In the embodiments of the present application, the term "wireless communication" may also be simply referred to as "communication", and the term "communication" may also be described as "data transmission", "information transmission", or "transmission".

The 3GPP TR 38.884 standard, when discussing CA, takes into account the beam squint phenomenon in a MIMO antenna array, and may select, depending on the situation, common beam management (CBM) or independent beam management (IBM) for two cells performing CA. For example, 3GPP takes into account the beam squint phenomenon. When a gain offset of beams of two cells calculated at different frequency points is within 1.7 dB, it can be considered that the beam squint of the two cells is not severe, and the two cells can perform CA under the same beam, i.e., CBM is selected. Otherwise, when a gain (array factor) offset of beams of the two cells calculated at different frequency points is greater than 1.7 dB, it can be considered that the beam squint of the two cells is relatively severe, and the two cells need to perform CA under independent beams respectively, i.e., IBM is selected. However, currently the target only considers the beam squint issue under different component carriers (component carriers, CCs), and does not consider the beam squint issue at different frequency points under the same CC. It can be known from the above illustrative description of beam squint that, under the same CC, multipath angles of electromagnetic waves of beams at different frequency points are different, and the impact of beam squint on different frequency points is also different (different beam directions).

In some techniques, when beamforming is performed on an antenna of a network device, the beamforming may be performed according to PMI feedback of the terminal device.

For example, Formula (4) shows a main form of PMI feedback, where S denotes a spatial domain basis, F denotes a frequency domain basis, C denotes a combination coefficient, and W denotes a precoding matrix used for beamforming.$W = S ∗ C ∗ {F}^{H} ,$ Formula(4)

For a Type I codebook: the terminal device only feeds back at a wideband, including a spatial domain basis index S and a combination coefficient C; for a Type II codebook: the terminal device may feed back at a wideband or a subband. If feeding back by subband, only the combination coefficient C is fed back in terms of subband feedback amplitude and phase, and the frequency domain basis may also be fed back by subband, but the spatial domain basis S is one group of wideband bases shared by all subbands.

For example, the base station may indicate, through a field "CSI-ReportingBand", which subbands the UE should feed back PMI coefficients C of, and the UE may feed back, through a field "subbandAmplitude", whether the UE has the capability to feed back PMI coefficients C by subband.

In the case where beamforming is performed through such PMI feedback, if beamforming is performed at different frequency points according to a wideband spatial domain basis, for example, the spatial domain basis of a center frequency point, beam angles at different frequency points will differ. Table 1 shows an example of beam angle differences at different frequency points.

**Table 1**

| Desired Angle | Frequency (GHz) | | | |
|---|---|---|---|---|
| | 5.6 | 6 | 6.4 | Angle Offset [°] |
| 6° | 5.5 | 6 | 6.3 | 0.8 |
| 18° | 16 | 18 | 19.2 | 3.2 |
| 42° | 39 | 42 | 45 | 6 |
| 60° | 56 | 60 | 64 | 8 |
| 90° | 84 | 90 | 96 | 12 |

Corresponding to Table 1, FIG. 4 shows a schematic diagram of beam offset (angle deviation) at different expected beam angles. It can be found that the angle differences between different subbands/frequency points and the center frequency point range from 3.2° to 12°. That is, in the case of feeding back the spatial domain basis according to a wideband, the beam angle differences of different subbands/frequency points under the same CC are relatively large, and the beam squint phenomenon is relatively severe. In particular, when the number of antenna array elements is large, considering that the beam width is smaller, if the spatial domain basis is also fed back according to a wideband, the beam angle differences of different subbands/frequency points under the same CC are even larger.

In this situation where beam angles differ at different subbands/frequency points, compared with the situation where no beam squint exists at the center frequency point, if beam squint exists, the channel capacity will also decrease.

Therefore, an embodiment of the present application provides a beamforming method and a communication apparatus. In the method, when performing PMI feedback, a spatial domain basis can be reported on a per-subband basis for a bandwidth under the same CC, so that the spatial domain basis corresponding to each subband in the wideband can be determined according to the reported spatial domain basis of the corresponding subband, and beamforming is performed according to the spatial domain basis corresponding to each subband. This takes into account that, under the wideband of the same CC, when multipath angles of different subbands differ, the spatial domain bases corresponding to different subbands are not completely identical. If beamforming is performed according to the spatial domain basis corresponding to each subband, this is equivalent to considering the problem that, due to different array factors at different frequency points, that is, different gains at different frequency points and different horizontal angles, the multipath angles of the electromagnetic waves of beams at different frequency points differ (the spatial domain bases differ), thereby causing different impacts of beam squint on different frequency points (different beam pointing directions). Moreover, for a base station, such changes in beam squint cannot be known in advance. Compared to existing methods where, under the same wideband, beamforming is performed according to the spatial domain basis of the wideband, which results in large beam angle differences, relatively severe beam squint, and low channel capacity, the present application can suppress the impact caused by beam squint and improve channel capacity.

Based on the above summary, the following introduces the embodiments of the present application.

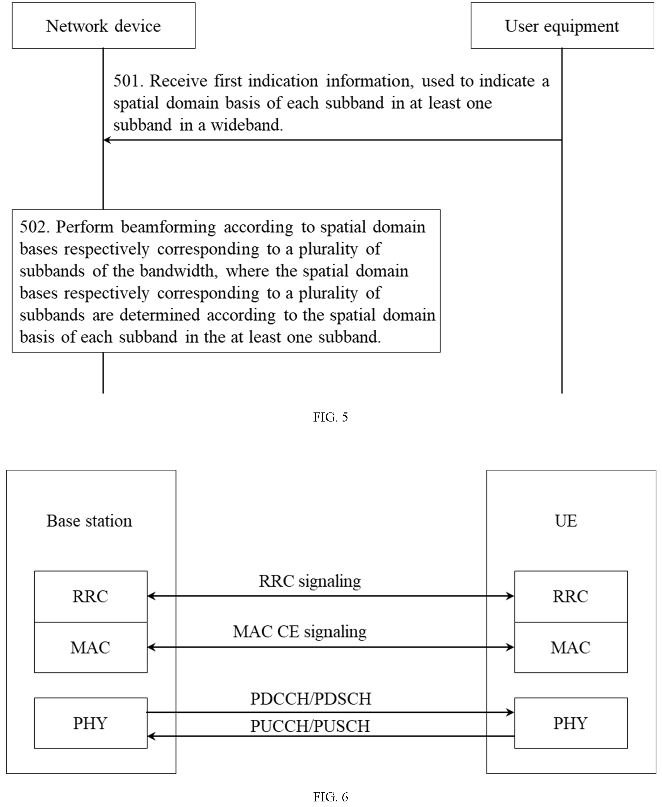

As shown in FIG. 5, a schematic flowchart of a beamforming method is provided, and the method comprises the following procedures.

501. A network device receives first indication information, where the first indication information is used to indicate a spatial domain basis of each subband in at least one subband in a wideband.

In some embodiments, the network device receives the first indication information sent by a terminal device. Correspondingly, the terminal device sends the first indication information, or in other words, the terminal device sends the first indication information to the network device.

In some embodiments, the network device is a base station, the terminal device is a UE, and the base station can receive the first indication information from the UE.

In some embodiments, the first indication information comprises an index of the spatial domain basis corresponding to each subband in the at least one subband. In this way, when the network device obtains, in the wideband, the index of the spatial domain basis corresponding to each subband in the at least one subband, the network device can determine the spatial domain basis corresponding to each subband in the at least one subband according to the index.

In some embodiments, before the network device receives the first indication information, the method further comprises: the network device sends second indication information, where the second indication information is used to instruct the terminal device to report the index of the spatial domain basis of each subband in the at least one subband. Or in other words, the network device sends the second indication information to the terminal device, and correspondingly, the terminal device receives the second indication information sent by the network device. That is to say, the network device can proactively inquire the terminal device to report the index of the spatial domain basis of each subband in the at least one subband.

In some embodiments, the first indication information comprises a bitmap indicating the at least one subband, and the index of the spatial domain basis corresponding to each subband in the at least one subband. This is equivalent to that the terminal device informs the network device, via the bitmap, which subbands' indexes of spatial domain bases are reported, and the index of the spatial domain basis corresponding to each of these subbands.

In some embodiments, before receiving the first indication information, the method further comprises: the network device sends third indication information, where the third indication information is used to instruct the terminal device to report the index of the spatial domain basis corresponding to each subband in the at least one subband when it is determined that a subband increment corresponding to the at least one subband is greater than or equal to an increment threshold. Or in other words, the network device sends the third indication information to the terminal device, and correspondingly, the terminal device receives the third indication information sent by the network device. The subband increment is the difference between the indexes of the spatial domain bases of a first subband and a second subband in the wideband, or the subband increment is the difference between the multipath angles of the first subband and the second subband in the wideband, or the subband increment is the difference between the absolute values of coefficients of the first subband and the second subband at the same angle in the wideband. The first subband and the second subband may be subbands corresponding to adjacent frequency points in the wideband. This takes into account that, between adjacent subbands, if the difference between the indexes of the spatial domain bases of the subbands is small, or the difference between the multipath angles is small, or the difference between the absolute values of the coefficients at the same angle is small, the same spatial domain basis can be used for beamforming, and the beam angle difference is not large. The coefficient here can be understood as the above-mentioned combination coefficient C.

In some embodiments, the first indication information is used to indicate a functional relationship of the index of the spatial domain basis of the at least one subband varying with the position of the subband, and parameters of the functional relationship. In this way, when the network device knows the position of each subband in the at least one subband, it can determine the index of the spatial domain basis of each subband in the at least one subband according to the functional relationship and the parameters of the functional relationship, thereby determining the spatial domain basis of each subband in the at least one subband according to the index.

In some embodiments, before receiving the first indication information, the method further comprises: the network device sends fourth indication information, where the fourth indication information is used to instruct the terminal device to report the functional relationship of the spatial domain basis of the at least one subband varying with the position of the subband, and parameters of the functional relationship. Or in other words, the network device sends the fourth indication information to the terminal device, and the terminal device receives the fourth indication information from the network device. That is, the network device can proactively inquire the terminal device about the spatial domain basis corresponding to each subband in the at least one subband.

In some embodiments, before receiving the first indication information, the method further comprises: the network device sends an inquiry message, where the inquiry message is used to inquire whether the terminal device has the capability of reporting indexes of spatial domain bases on a per-subband basis. The network device receives a response message, where the response message is used to indicate that the terminal device has the capability of reporting indexes of spatial domain bases on a per-subband basis. Or in other words, the network device sends the inquiry message to the terminal device, and the terminal device receives the inquiry message sent by the network device. The terminal device sends the response message to the network device, and the network device receives the response message from the terminal device. In this way, when the terminal device has the capability of reporting indexes of spatial domain bases on a per-subband basis, the network device can learn, from the terminal device, the indexes of the spatial domain bases corresponding to different subbands under the wideband, so as to perform beamforming according to such fine-grained differentiation of spatial domain bases for different subbands.

In some embodiments, the at least one subband comprises a subband of a center frequency point, a subband of a maximum frequency point, and a subband of a minimum frequency point in the wideband. That is, the terminal device does not need to report the index of the spatial domain basis of each subband in the wideband to the network device, but may only need to report the indexes of the spatial domain bases of some subbands. For the network device, the indexes of the spatial domain bases of other subbands in the bandwidth can be inferred according to the reported indexes of the spatial domain bases of the subbands according to certain principles. In this way, the signaling overhead between the network device and the terminal device is also relatively small.

502. The network device performs beamforming according to spatial domain bases respectively corresponding to a plurality of subbands of the bandwidth, where the spatial domain bases respectively corresponding to the plurality of subbands are determined according to the spatial domain basis of each subband in the at least one subband.

In some embodiments, the network device can determine weights for beamforming respectively corresponding to the plurality of subbands according to the spatial domain bases respectively corresponding to the plurality of subbands; and perform beamforming according to the weight corresponding to each subband in the plurality of subbands. In this way, compared to performing beamforming according to the spatial domain basis of the wideband, which results in relatively severe large beam squint, in the present application, the network device can determine the weight for beamforming according to the spatial domain basis corresponding to each subband, and perform beam coherent superposition in the same direction according to the weights corresponding to different subbands, to obtain beams under the plurality of subbands. The present application takes into account the problem that the multipath angles of the electromagnetic waves of beams at different frequency points differ (the spatial domain bases differ), thereby causing different impacts of beam squint on different frequency points (different beam pointing directions). That is, the present application can suppress the impact caused by beam squint and improve channel capacity.

The following introduces the embodiments of the present application by taking the network device being a base station and the terminal device being a UE as an example.

To facilitate understanding of the following embodiments, a protocol layer framework of the base station and the UE is first introduced here. As shown in FIG. 6, a schematic diagram of a protocol layer framework of the base station and the UE in the present application is provided. The base station and the UE may comprise a radio resource control (RRC) layer, a medium access control (MAC) layer, and a physical layer (PHY). The RRC layer can be used for the base station and the UE to send and receive RRC signaling. The MAC layer can be used for the base station and the UE to send and receive medium access control control element (MAC CE) signaling. The PHY layer can be used for the base station and the UE to send and receive uplink/downlink control signaling and uplink/downlink data. For example, the base station can send downlink control signaling to the UE via a physical downlink control channel (PDCCH) at the PHY layer, and the base station can send downlink data to the UE via a physical downlink shared channel (PDSCH) at the PHY layer. The UE can send uplink control signaling to the base station via a physical uplink control channel (PUCCH) at the PHY layer, and the UE can send uplink data to the base station via a physical uplink shared channel (PUSCH) at the PHY layer. Of course, this is only an exemplary introduction to the functions of the RRC layer, the MAC layer, and the PHY layer, and the present application does not limit the functions of the RRC layer, the MAC layer, and the PHY layer.

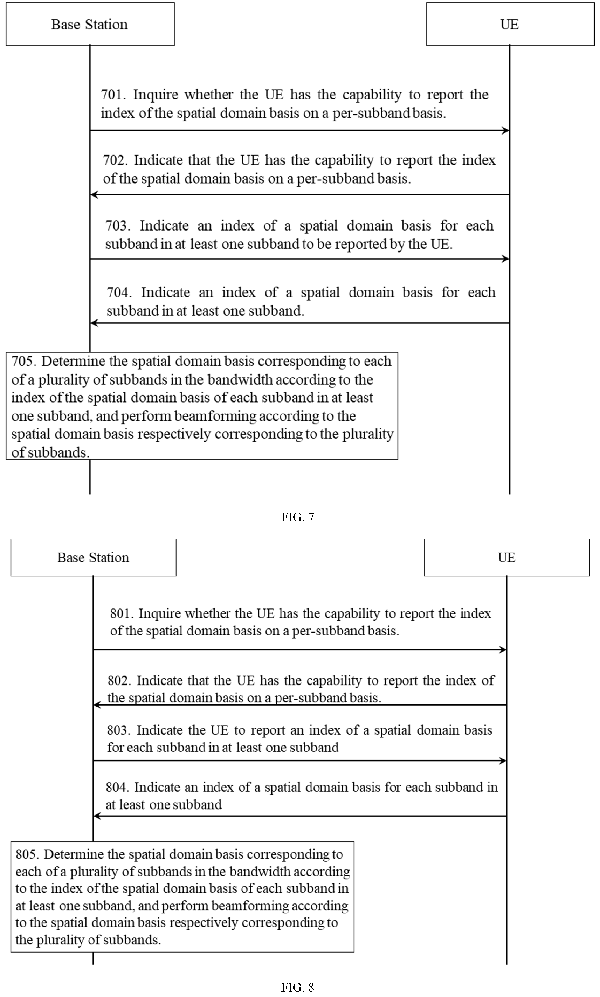

As shown in FIG. 7, a schematic flowchart of a beamforming method provided by an embodiment of the present application is provided, and the method comprises the following procedures.

701. A base station sends an inquiry message to a UE, where the inquiry message is used to inquire whether the UE has the capability of reporting indexes of spatial domain bases on a per-subband basis.

In some embodiments, the inquiry message can be implemented through MAC CE signaling. After the base station establishes an RRC link with the UE, the base station can send first MAC CE signaling to the UE, where the first MAC CE signaling is used to inquire whether the UE has the capability of reporting the index of the spatial domain basis on a per-subband basis.

In some embodiments, the spatial domain basis in the present application may be indication information of an angle or indication information of a distance, etc. The present application does not limit the content of the spatial domain basis. For example, the indication information of the angle may be indication information of multipath angles of electromagnetic waves transmitted between a base station and a UE, and the indication information of the distance may be distance information between the base station and the UE.

702. The UE sends a response message to the base station, where the response message is used for indicating that the UE has a capability of reporting an index of a spatial domain basis on a per-subband basis.

In some embodiments, the response message may be implemented through MAC CE signaling. The UE may send second MAC CE signaling to the base station, where the second MAC CE signaling is used for indicating that the UE has the capability of reporting an index of a spatial domain basis on a per-subband basis.

Exemplarily, the second MAC CE signaling may comprise a "spatialScalingType" field, where the "spatialScalingType" field is the following content:

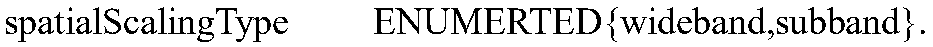

In a case where the content of the "spatialScalingType" field in the second MAC CE signaling received by the base station is " ENUMERTED{wideband,subband}", it is equivalent to the UE replying to the base station that the UE capability of "reporting an index of a spatial domain basis on a per-subband basis" is "Yes", and the base station determines that the UE has the capability of reporting an index of a spatial domain basis on a per-subband basis.

703. The base station sends a first RRC message to the UE, where the first RRC message is used for indicating the UE to report an index of a spatial domain basis of each subband in at least one subband in a bandwidth.

The first RRC message here is an implementation of the second indication information in step 501 of the present application.

In some embodiments, in a case where the base station determines that the UE has the capability of reporting an index of a spatial domain basis on a per-subband basis, the base station may send a first RRC message to the UE, where the first RRC message indicates the following information:
1) Indication information that the index of the spatial domain basis needs to be reported on a per-subband basis;
2) A bitmap of subbands for which the index of the spatial domain basis needs to be reported.

Exemplarily, in the first RRC message, the base station indicates the UE that the index of the spatial domain basis needs to be reported on a per-subband basis may be indicated through a "subbandSpatial" field, and the content of the "subbandSpatial" field is "BOOLEAN", namely:

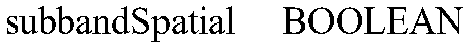

For example, if the value of "BOOLEAN" is 1, it indicates that the index of the spatial domain basis needs to be reported on a per-subband basis. If the value of "BOOLEAN" is 0, it indicates that the index of the spatial domain basis does not need to be reported on a per-subband basis.

In the first RRC message, the base station indicates the UE the bitmap of subbands for which the index of the spatial domain basis needs to be reported may be indicated through a "reportSpatialcontiguration" field. Exemplarily, the content of the "reportSpatialcontiguration" field may be:

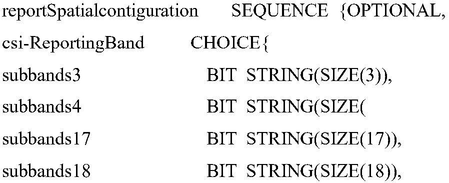

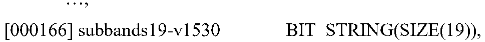

That is equivalent to the base station instructing the UE to report indexes of spatial domain bases of subbands identified as 3, 4, 17, 18, ..., 19, etc.

Exemplarily, the 2 bits in the bitmap represent the number of subbands in the wideband, and each bit indicates whether to report the index of the spatial domain basis of the subband.

In some embodiments, when the base station determines that spatial domain bases of certain subbands are the same, it can also instruct the UE to only report the index of the spatial domain basis of one subband among these subbands, that is, for these subbands, the base station can only indicate the bit of one subband among them in the bitmap.

Alternatively, in some embodiments, the base station may not need to indicate the bitmap to the UE, and the UE can report the index of the spatial domain basis of at least one subband according to a default configuration. This default configuration is pre-agreed between the base station and the UE.

For example, the default configuration is used to indicate that the UE only needs to report the indices of the spatial domain basis of the maximum subband, the minimum subband, and the center subband in the wideband, that is, the at least one subband comprises the maximum subband, the minimum subband, and the center subband. For the base station, the base station can calculate and obtain the indices of the spatial domain basis corresponding to other subbands in the wideband according to the default configuration and a preset manner. For the base station and the UE, the signaling overhead in this manner is relatively small.

704. The UE sends a second RRC message to the base station, the second RRC message being used to indicate the index of the spatial domain basis of each subband in the at least one subband.

Herein, the second RRC message is an implementation of the first indication information in step 501 of the present application.

According to the description in step 703, the second RRC message may comprise the index of the spatial domain basis corresponding to the at least one subband corresponding to the bitmap indicated by the base station, or the second RRC message comprises the indices of the spatial domain basis corresponding to the maximum subband, the minimum subband, and the center subband in the wideband.

705. The base station determines, according to the index of the spatial domain basis of each subband in the at least one subband, the spatial domain basis respectively corresponding to a plurality of subbands in the bandwidth, and performs beamforming according to the spatial domain basis respectively corresponding to the plurality of subbands.

In some embodiments, the base station can determine, according to the index of the spatial domain basis of each subband in the at least one subband, the spatial domain basis of each subband in the at least one subband. Then, the base station can determine, according to the principle that the spatial domain basis of adjacent subbands can be the same, the spatial domain basis corresponding to other subbands in the wideband other than the at least one subband. The base station determines, according to the spatial domain basis respectively corresponding to the plurality of subbands, weights for beamforming respectively corresponding to the plurality of subbands, and performs beam coherent superposition in the same direction according to the weight corresponding to each subband in the plurality of subbands, so as to perform beamforming.

For example, there are multiple manners of performing beamforming. For example, in NR, since the frequency band used is relatively high, antennas typically use a multi-panel structure. In order to construct a large-scale antenna array, integrated antenna in package/tile (AIP/AIT) is easy to implement with relatively low cost. In AIP/AIT, different radio frequency (RF) connection structures can be used to implement different beamforming architectures. For example, digital beamforming (DBF), analog beamforming (ABF), or hybrid beamforming (HBF), etc. Herein, DBF can provide flexible beamforming, ABF can provide steering accuracy and flexibility at low cost, and HBF is typically a compromise adopted between DBF and ABF. Herein, the main difference between ABF and DBF lies in the manner of completing beamforming, and both manners require good inter-channel matching. In ABF, thin-film analog delay lines and summation can be used, wherein only one (relatively high resolution) high-speed analog-to-digital converter (ADC) is required, whereas DBF requires multiple high-speed high-resolution ADCs.

If the DBF or HBF manner is adopted for beamforming, the digital domain and the spatial domain basis corresponding to each subband can be used to determine the beamforming weights corresponding to different subbands, and beam coherent superposition is performed in the same direction according to the weight corresponding to each subband in the plurality of subbands, so as to perform beamforming.

If the ABF manner is adopted for beamforming, delayers and the spatial domain basis corresponding to each subband can be used to determine the beamforming weights corresponding to different subbands, and beam coherent superposition is performed in the same direction according to the weight corresponding to each subband in the plurality of subbands, so as to perform beamforming.

Certainly, the present application is not limited to these three beamforming manners, and can also be applicable to processes of other beamforming manners.

In this way, by reporting the spatial domain basis at a subband granularity through the present application to perform subband-level beamforming, i.e., to perform transmission of control information or data of the PHY layer between the base station and the UE, the impact of beam squint caused by different spatial domain bases of subbands can be suppressed, and the channel capacity during beam squint can be improved.

FIG. 8 is a schematic flowchart of a beamforming method provided in an embodiment of the present application, the method comprising the following processes.

801. The base station sends an inquiry message to the UE, the inquiry message being used to inquire whether the UE has the capability of reporting the index of the spatial domain basis on a per-subband basis.

For the implementation of step 801, reference can be made to the description of step 701.

802. The UE sends a response message to the base station, the response message being used to indicate that the UE has the capability of reporting the index of the spatial domain basis on a per-subband basis.

For the implementation of step 802, reference can be made to the description of step 702.

803. The base station sends a third RRC message to the UE, the third RRC message being used to indicate that the UE reports the index of the spatial domain basis of each subband in the at least one subband in the bandwidth.

The third RRC message herein is an implementation of the third indication information in step 501 of the present application.

In some embodiments, when the base station determines that the UE has the capability of reporting the index of the spatial domain basis on a per-subband basis, the base station can send a third RRC message to the UE, the third RRC message indicating the following information:
1) Indication information that the index of the spatial domain basis needs to be reported on a per-subband basis;
2) Threshold for subband increment reporting.

Wherein, the threshold for subband increment reporting can be used to indicate that when the subband increment between subbands exceeds the threshold, the index of the spatial domain basis corresponding to the subband needs to be reported.

In some embodiments, the subband increment may be a subband increment of adjacent subbands in the bandwidth after sorting the subbands according to the frequency point size of the subbands. For example, the subband increment is a difference value of indexes of spatial domain bases between adjacent subbands, or a difference value of multipath angles between adjacent subbands, or a difference value of absolute values of coefficients under the same angle (for example, multipath angle) between adjacent subbands. In this way, the above-mentioned at least one subband comprises the subband corresponding to the maximum frequency point after sorting the subbands according to the order of the frequency point size of the subbands, or the subband corresponding to the minimum frequency point. This takes into account that, if the subband increment between adjacent subbands does not exceed the threshold, for example, when the difference value of the indexes of the spatial domain bases of adjacent subbands is less than the threshold corresponding to the indexes, it can be considered that the two subbands can use the same spatial domain basis for beamforming, the beam squint phenomenon is not serious, and it suffices to report only the index of the spatial domain basis of the preceding subband in order among the two subbands. Similarly, if the difference value of the multipath angles of adjacent subbands is less than the threshold corresponding to the multipath angles, it can also be considered that the two subbands can use the same spatial domain basis for beamforming, the beam squint phenomenon is not serious, and it suffices to report only the index of the spatial domain basis of the preceding subband in order among the two subbands. Similarly, if the absolute value of the coefficient under the same angle of adjacent subbands is less than the threshold corresponding to the absolute value of the coefficient, it can also be considered that the two subbands can use the same spatial domain basis for beamforming, the beam squint phenomenon is not serious, and it suffices to report only the index of the spatial domain basis of the preceding subband in order among the two subbands.

Exemplarily, the third RRC message may comprise the following 2 fields:

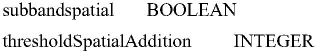

Wherein, the field "subbandspatial" is the indication information that the index of the above-mentioned spatial domain basis needs to be reported on a per-subband basis, for example, when the value of the field "subbandspatial" is 1, it indicates that the index of the spatial domain basis needs to be reported on a per-subband basis, and when the value of the field "subbandspatial" is 0, it indicates that the index of the spatial domain basis does not need to be reported on a per-subband basis. The field "thresholdSpatialAddition" indicates the threshold for the above-mentioned subband increment reporting.

804. The UE sends a fourth RRC message to the base station, the fourth RRC message being used to indicate the index of the spatial domain basis of each subband in the at least one subband.

In some embodiments, the fourth RRC message comprises the first indication information in step 501 of the present application.

Exemplarily, the fourth RRC message comprises the index of the spatial domain basis corresponding to each subband in the at least one subband determined by the UE according to the increment threshold, for example, comprising the identifier of each subband and the index of the spatial domain basis corresponding to each subband.

Alternatively, the fourth RRC message comprises a bitmap of the at least one subband reported by the UE, and the index of the spatial domain basis corresponding to each subband in the at least one subband.

805. The base station determines, according to the index of the spatial domain basis of each subband in the at least one subband, the spatial domain bases respectively corresponding to the multiple subbands in the bandwidth, and performs beamforming according to the spatial domain bases respectively corresponding to the multiple subbands.

For the implementation of step 805, reference may be made to the description of step 705.

Thus, by reporting the spatial domain basis at the subband granularity according to the present application to perform subband-level beamforming, i.e., to perform transmission of control information or data at the PHY layer between the base station and the UE, the influence of beam squint caused by different spatial domain bases of subbands can be suppressed, and the channel capacity during beam squint can be improved.

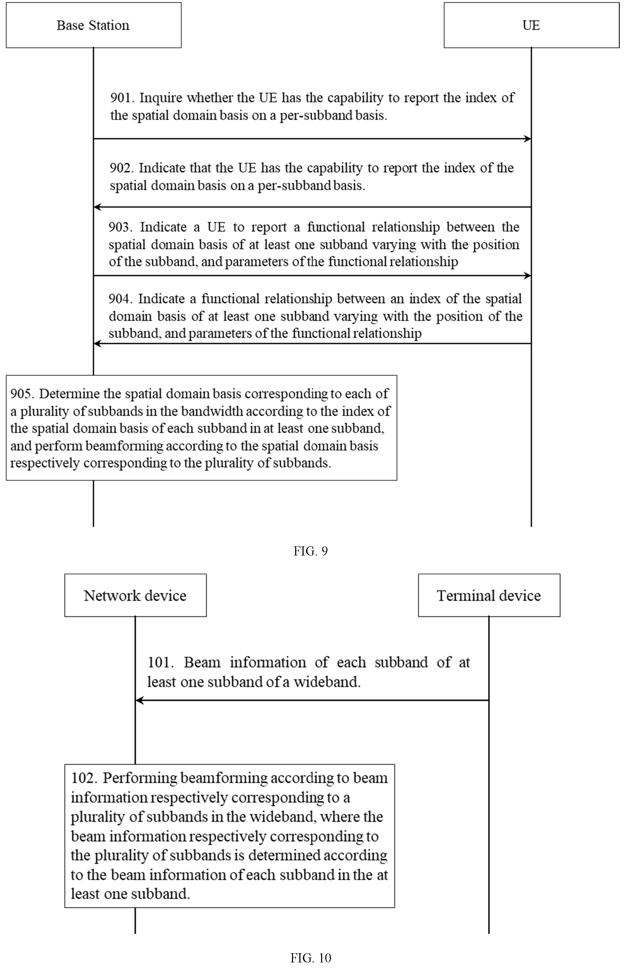

FIG. 9 is a schematic flowchart of a beamforming method provided by an embodiment of the present application. The method comprises the following flow.

901. The base station sends an inquiry message to the UE, the inquiry message being used to inquire whether the UE has the capability of reporting the index of the spatial domain basis on a per-subband basis.

For the implementation of step 901, reference may be made to the description of step 701.

902. The UE sends a response message to the base station, the response message being used to indicate that the UE has the capability of reporting the index of the spatial domain basis on a per-subband basis.

For the implementation of step 902, reference may be made to the description of step 702.

903. The base station sends a fifth RRC message to the UE, the fifth RRC message being used to instruct the UE to report a functional relationship of the spatial domain basis of at least one subband varying with the position of the subband and parameters of the functional relationship.

The fifth RRC message here is an implementation of the fourth indication information in step 501 of the present application.

In some embodiments, when the base station determines that the UE has the capability of reporting the index of the spatial domain basis on a per-subband basis, the base station may send a fifth RRC message to the UE, the fifth RRC message indicating the following information:
1) Indication information that the index of the spatial domain basis needs to be reported on a per-subband basis;
2) Indication information for reporting a functional relationship of the spatial domain basis of at least one subband changing with subband positions and parameters of the functional relationship.

Exemplarily, the fifth RRC message may include the following two fields: 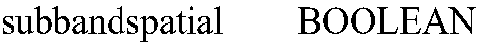 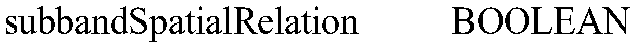 wherein the field "subbandspatial" is the indication information that the index of the aforementioned spatial domain basis needs to be reported on a per-subband basis, for example, when the value of the field "subbandspatial" is 1, it indicates that the index of the spatial domain basis needs to be reported on a per-subband basis, and when the value of the field "subbandspatial" is 0, it indicates that the index of the spatial domain basis does not need to be reported on a per-subband basis. The field "subbandSpatialRelation" indicates reporting of a functional relationship of the spatial domain basis of at least one subband varying with the position of the subband and parameters of the functional relationship; when the value of the field "subbandSpatialRelation" is 1, it indicates that the functional relationship of the spatial domain basis of at least one subband varying with the position of the subband and the parameters of the functional relationship need to be reported; when the value of the field "subbandSpatialRelation" is 0, it indicates that the functional relationship of the spatial domain basis varying with the position of the subband and the parameters of the functional relationship do not need to be reported on a per-subband basis.

904. The UE sends a sixth RRC message to the base station, the sixth RRC message being used to indicate the functional relationship of the index of the spatial domain basis of at least one subband varying with the position of the subband and parameters of the functional relationship.

In some embodiments, the fourth RRC message comprises the first indication information in step 501 of the present application.

Exemplarily, the type of the functional relationship of the index of the spatial domain basis varying with the subband can be various, for example, it can be a linear function, a quadratic function, a cubic function, a sin function, or a function of Taylor coefficients * n bits, where n is an integer, for example, n is 3. The parameters of the functional relationship of the index of the spatial domain basis varying with the position of the subband are, for example, a1, a2, and a3, and in the case where each parameter occupies 3 bits, the parameters of the functional relationship of the index of the spatial domain basis varying with the position of the subband may occupy 9 bits.

In some embodiments, if the functional relationship is relatively complex, the base station can obtain the index of the spatial domain basis by performing calculation after obtaining Taylor coefficients using Taylor expansion. For example, Taylor coefficients of order 0 to 3 are obtained using Taylor expansion, for example, the Taylor coefficients are in the following form: ${\sum }_{n = 0}^{∞} \frac{{f}^{\left(n\right)} \left(a\right)}{n !} {\left(x-a\right)}^{n}$, and the present application does not limit the form of the Taylor coefficients.

In this way, for the base station, upon receiving the functional relationship and the parameters of the functional relationship, the base station can determine, according to the functional relationship and the parameters of the functional relationship as well as the position of at least one subband, the index of the spatial domain basis corresponding to each subband in the at least one subband.

In some embodiments, the sixth RRC message may further comprise at least one of the following information: a bitmap of non-zero coefficients, an index of the strongest coefficient (index of frequency domain and angle), an index of the selected frequency domain basis, the phase and amplitude of the coefficient, the index of the selected spatial domain basis, or the oversampling rate of the spatial domain basis. Wherein, the coefficient here can be understood as the aforementioned combination coefficient C.

905. The base station determines, according to the index of the spatial domain basis of each subband in the at least one subband, the spatial domain basis respectively corresponding to a plurality of subbands in the bandwidth, and performs beamforming according to the spatial domain basis respectively corresponding to the plurality of subbands.

For the implementation of step 905, reference may be made to the description of step 705.

Thus, by reporting the spatial domain basis at the subband granularity according to the present application to perform subband-level beamforming, i.e., to perform transmission of control information or data of the PHY layer between the base station and the UE, the impact of beam squint caused by different spatial domain bases of subbands can be suppressed, thereby improving the channel capacity during beam squint.

The above describes the process of performing beamforming under PMI feedback.

In some embodiments, beamforming can also be performed through beam management feedback. The beam management feedback is equivalent to feeding back a full-band optimal beam identity (identity, ID) for the entire CA, and each CC performs beamforming according to the optimal beam ID. For example, for the base station, the base station can pre-shape multiple wide beams and narrow beams, and the UE can select a narrow beam in a certain wide beam according to a certain beam selection rule as the optimal beam and report it to the base station, and the base station performs beamforming for each CC in the entire CA according to the reported narrow beam. In this case, it is equivalent to performing beamforming for all subbands in each CC according to the same beam ID. This is similar to the problem existing in the foregoing beamforming by PMI feedback, and since the multipath angles corresponding to different subbands under one CC are different, the problem of beam squint still exists.

Based on this, an embodiment of the present application further provides a beamforming method, in which a network device can instruct a terminal device to report a beam identity corresponding to each subband in at least one subband in a wideband, and the network device determines, according to the beam identity corresponding to each subband in the at least one subband, the beam corresponding to each subband in the wideband, so as to perform beamforming according to the beam corresponding to each subband. Here, the beam identity corresponding to each subband can be understood as the identity of the optimal beam corresponding to each subband. In this way, compared with the relatively serious problem of beam squint caused by performing beamforming according to one full-band optimal beam identity corresponding to the entire CA, in the present application, the network device can perform beamforming according to the beam corresponding to each subband. The present application takes into account the problem that the multipath angles of the electromagnetic waves of beams at different frequency points are different (optimal beams are different), thereby causing different impacts of beam squint (different beam pointing directions) on different frequency points, that is, the present application can suppress the impact caused by beam squint and improve the channel capacity.

Therefore, as shown in FIG. 10, it is a schematic flowchart of a beamforming method provided by an embodiment of the present application, and the method comprises the following process.

101. A network device receives first indication information, the first indication information being used to indicate beam information of each subband of at least one subband of a wideband.

Similar to the above embodiments, the network device receiving the first indication information comprises: the network device receives the first indication information sent by a terminal device. Correspondingly, the terminal device sends the first indication information to the network device.

In some embodiments, the network device is a base station, and the terminal device is a UE.

In some embodiments, the beam information of each subband in the at least one subband comprises an optimal beam identity corresponding to each subband in the at least one subband, for example, specifically comprising the identity/position information of each subband in the at least one subband and the optimal beam identity corresponding to each subband.

In some embodiments, the beam information of each subband in the at least one subband comprises a bitmap of the at least one subband and the optimal beam identity corresponding to each subband in the at least one subband.

In some embodiments, before the network device receives the first indication information, the method further comprises: the network device sends an inquiry message, the inquiry message being used to inquire whether the terminal device has the capability of reporting beam information on a per-subband basis; and the network device receives a response message, the response message being used to indicate that the terminal device has the capability of reporting beam information on a per-subband basis.

In some embodiments, before the network device receives the first indication information, the method further includes: the network device sends second indication information, where the second indication information is used to instruct a terminal device to report beam information corresponding to each subband in at least one subband. Alternatively, the network device sends the second indication information to the terminal device, and correspondingly, the terminal device receives the second indication information sent by the network device.

102. The network device performs beamforming according to beam information respectively corresponding to a plurality of subbands of a wideband, where the beam information respectively corresponding to the plurality of subbands is determined according to the beam information of each subband in the at least one subband.

In some embodiments, the network device may determine, according to the beam information corresponding to each subband in the at least one subband of the wideband, beam information corresponding to other subbands of the wideband other than the at least one subband, thereby obtaining the beam information respectively corresponding to the plurality of subbands of the wideband. Then, the network device may perform beamforming according to the beam information respectively corresponding to the plurality of subbands.

In this way, in the present application, the present application considers the problem that electromagnetic waves of beams at different frequency points/subbands have different multipath angles (different optimal beams), thereby causing different beam squint effects on different frequency points (different beam pointing directions), and the network device in the present application can perform beamforming according to the optimal beam corresponding to each subband. That is, the manner of performing beamforming at subband granularity in the present application can suppress the effects caused by beam squint and improve channel capacity.

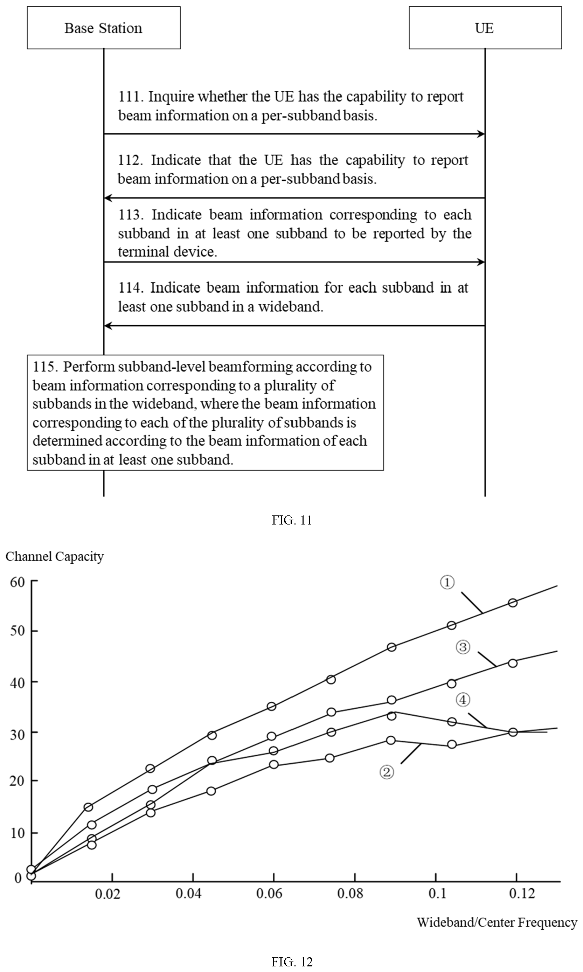

As shown in FIG. 11, a schematic flowchart of a beamforming method provided by an embodiment of the present application, the method includes the following procedures.

111. A base station sends an inquiry message to a UE, where the inquiry message is used to inquire whether the UE has a capability of reporting beam information on a per-subband basis.

In some embodiments, the inquiry message may be implemented through MAC-CE signaling. After the base station establishes an RRC link with the UE, the base station may send first MAC-CE signaling to the UE, where the first MAC-CE signaling is used to inquire whether the UE has the capability of reporting beam information on a per-subband basis.

In some embodiments, the beam information may be understood as an optimal beam ID corresponding to a subband.

112. The UE sends a response message to the base station, where the response message is used to indicate that the UE has the capability of reporting beam information on a per-subband basis.

In some embodiments, the response message may be implemented through MAC-CE signaling. The UE may send second MAC-CE signaling to the base station, where the second MAC-CE signaling is used to indicate that the UE has the capability of reporting beam information on a per-subband basis.

Exemplarily, the second MAC-CE signaling may include a "beamManagementSubband" field, where the "beamManagementSubband" field is as follows:

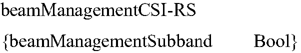

For example, when the value of the "beamManagementSubband" field is 1, it indicates that the UE has the capability of reporting beam information on a per-subband basis, which is equivalent to the UE replying to the base station that the UE capability of "reporting beam information on a per-subband basis" is "yes"; when the value of the "beamManagementSubband" field is 0, it indicates that the UE does not have the capability of reporting beam information on a per-subband basis.

113. The base station sends a first RRC message to the UE, where the first RRC message is used to instruct the terminal device to report beam information corresponding to each subband in at least one subband.

The first RRC message herein is an implementation of the second indication information in step 101 of the present application.

In some embodiments, when the base station determines that the UE has the capability of reporting beam information on a per-subband basis, the base station may send the first RRC message to the UE, where the first RRC message indicates the following information:
1) indication information that beam information of narrow beams needs to be reported on a per-subband basis;
2) indication information of at least one subband for which the beam information needs to be reported.

Exemplarily, in the first RRC message, the base station indicating that the UE beam information needs to be reported on a per-subband basis may be indicated through a field "subbandBeamManagement", and the content of the field "subbandBeamManagement" is "BOOLEAN", that is:

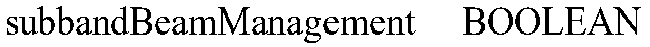

For example, if the value of "BOOLEAN" is 1, it indicates that beam information needs to be reported on a per-subband basis. If the value of "BOOLEAN" is 0, it indicates that beam information does not need to be reported on a per-subband basis.

In the first RRC message, the base station indicates the subbands for which the UE needs to report beam information, which can be indicated through a field

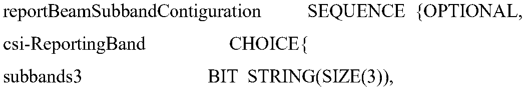

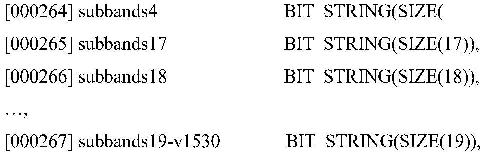

That is, the base station indicates that the UE needs to report beam information of subbands identified as 3, 4, 17, 18, ..., 19, etc.

114. The UE sends a second RRC message to the base station, the second RRC message being used to indicate beam information of each subband in at least one subband in the wideband.

Wherein, the second RRC message is an implementation of the first indication information in step 101 of the present application.

In some embodiments, the UE can, after performing scanning and selection of wide beams and narrow beams, report the optimal beam identifier on a per-subband basis for the optimal narrow beam.

Exemplarily, the UE can first scan multiple wide beams sent by the base station, and determine the channel quality/signal strength corresponding to each wide beam among the multiple wide beams. According to the channel quality/signal strength corresponding to each wide beam, select a first wide beam having the best channel quality/signal strength from the multiple wide beams. The UE then scans each narrow beam in the selected first wide beam, and measures each subband of at least one subband of the first wide beam in the wideband, i.e., the channel quality/signal strength of each subband corresponding to each narrow beam in the first wide beam. That is, here the UE can receive multiple narrow beams in the first wide beam on each subband. Thereafter, the UE selects, for each subband, an optimal beam having the best channel quality/signal strength according to the channel quality/signal strength of each subband corresponding to each narrow beam in the first wide beam. The UE then reports to the base station the optimal beam ID corresponding to each subband in the at least one subband.

Wherein, the wide beam is, for example, a synchronization signal block (sync signal block, SSB), and the narrow beam is a channel state information reference signal (channel state information reference signal, CSI-RS). The CSI-RS can be understood as a pilot used for measuring CSI. The present application does not limit the wide beam to be only SSB, nor does it limit the narrow beam to be only CSI-RS.

115. The base station performs subband-level beamforming according to beam information respectively corresponding to multiple subbands in the wideband, the beam information respectively corresponding to the multiple subbands being determined according to the beam information of each subband in the at least one subband.

In some embodiments, there can be multiple ways for the base station to perform subband-level beamforming according to the beam information respectively corresponding to the multiple subbands in the wideband, such as DBF, HBF, or ABF, etc.

Thus, the present application considers the problem that electromagnetic waves of beams at different frequency points/subbands have different multipath angles (different optimal beams), thereby causing different impacts of beam squint on different frequency points (different beam pointing directions), and the base station in the present application can perform beamforming according to the optimal beam corresponding to each subband. That is, the beamforming manner at the subband granularity in the present application can suppress the impact caused by beam squint and improve channel capacity.

The following presents a comparison of channel capacity when performing beamforming according to a subband-level spatial domain basis or performing beamforming according to subband-level beam information, which suppresses beam squint, versus channel capacity when performing beamforming according to a full-band/wideband spatial domain basis or performing beamforming according to the optimal beam ID of the full-band/wideband under CA. As shown in FIG. 12, it is a schematic diagram of channel capacity under different ratios of wideband to center frequency point. In FIG. 12, the horizontal axis represents different ratios of wideband to center frequency point, and the vertical axis represents channel capacity (gbits/sec). Wherein, curve ① represents the channel capacity corresponding to different ratios of wideband to center frequency point obtained statistically when the base station uses a uniform linear array (uniform linear arrays, ULA) antenna system and the number of antenna elements is N=64, when no beam squint is achieved by adopting the present application; curve ② represents the channel capacity corresponding to different ratios of wideband to center frequency point obtained statistically when beamforming is performed according to the full-band/wideband spatial domain basis or beamforming is performed according to the optimal beam ID of the full-band/wideband under CA, and beam squint exists, the base station uses a ULA antenna system, and the number of antenna elements is 64. It can be seen that, also using a ULA antenna system and having 64 antenna elements, at the same ratio of wideband to center frequency point, the channel capacity shown by curve ① is higher than the channel capacity shown by curve ②. For example, when the ratio of wideband (400M) to center frequency point (6.5GHz) is 0.06, the channel capacity in the case where beam squint exists is 50% less than the channel capacity in the case where no beam squint exists compared with the channel capacity in the case where no beam squint exists; near the ratio of wideband (800M) to center frequency point (6.5GHz) being 0.12, the channel capacity in the case where beam squint exists is 73% less than the channel capacity in the case where no beam squint exists compared with the channel capacity in the case where no beam squint exists.

Similarly, curve ③ represents the channel capacity corresponding to different ratios of wideband to center frequency point obtained statistically when the base station uses a ULA antenna system and the number of antenna elements is N=32, when no beam squint is achieved by adopting the present application; curve ④ represents the channel capacity corresponding to different ratios of wideband to center frequency point obtained statistically when beamforming is performed according to the full-band/wideband spatial domain basis or beamforming is performed according to the optimal beam ID of the full-band/wideband under CA, and beam squint exists, the base station uses a ULA antenna system, and the number of antenna elements is 32. It can be seen that, also using a ULA antenna system and having 32 antenna elements, at the same ratio of wideband to center frequency point, the channel capacity shown by curve ③ is higher than the channel capacity shown by curve ④. For example, when the ratio of wideband (400M) to center frequency point (6.5GHz) is 0.06, the channel capacity in the case where beam squint exists is 7% less than the channel capacity in the case where no beam squint exists compared with the channel capacity in the case where no beam squint exists; near the ratio of wideband (800M) to center frequency point (6.5GHz) being 0.12, the channel capacity in the case where beam squint exists is 40% less than the channel capacity in the case where no beam squint exists compared with the channel capacity in the case where no beam squint exists.

Thus, compared with the case without beam squint, when beam squint exists, the channel capacity is significantly reduced, and the reduction amount is approximately 7% to 73% of the channel capacity in the case without beam squint.

It can be understood that, to implement the functions in the foregoing embodiments, the network device and the terminal device include corresponding hardware structures and/or software modules for executing the respective functions. A person skilled in the art should readily appreciate that, with the units and method steps of the various examples described in the embodiments disclosed in the present application, the present application can be implemented in a form of hardware or a combination of hardware and computer software. Whether a function is executed in a manner of hardware or computer software driving hardware depends on specific application scenarios and design constraints of the technical solutions.

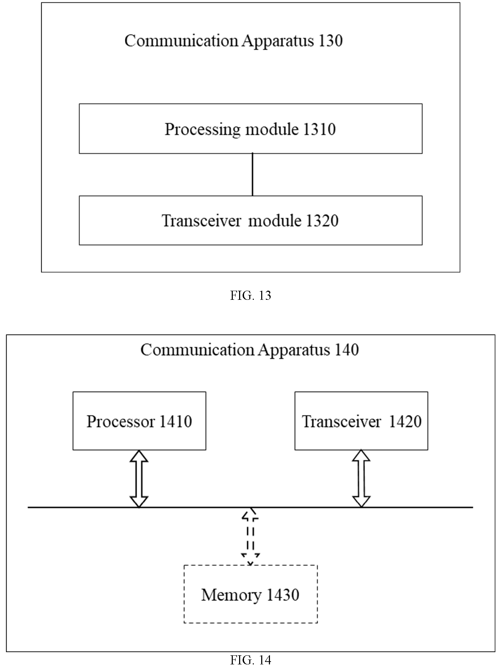

FIG. 13 and FIG. 14 are schematic structural diagrams of possible communication apparatuses provided by the embodiments of the present application. These communication apparatuses can be used to implement the functions of the network device and the terminal device in the foregoing method embodiments, and thus can also achieve the beneficial effects possessed by the foregoing method embodiments. In the embodiments of the present application, the communication apparatus may be one of the device 301 or the devices 302 to 307 as shown in FIG. 3, or may also be a communication module (such as a chip or a chipset) applied to these devices. The related communication apparatus is used to implement data transmission, for example, can be used to implement the beamforming described above.

As shown in FIG. 13, the communication apparatus 130 includes a processing module 1310 and a transceiver module 1320. The communication apparatus 130 is used to implement the functions of the network device or the terminal device in the method embodiments shown in the foregoing FIG. 5 to FIG. 11.

When the communication apparatus 130 is used to implement the functions of the network device in the method embodiments shown in FIG. 5 to FIG. 11: the transceiver module 1320 can be used to receive the first indication information, send an inquiry message, receive a response message, send the first RRC message/third RRC message/fifth RRC message, and receive the second RRC message/fourth RRC message/sixth RRC message; the processing module 1310 can be used to perform beamforming according to spatial domain bases or beam information respectively corresponding to a plurality of subbands of a bandwidth;

When the communication apparatus 130 is used to implement the functions of the terminal device in the method embodiments shown in FIG. 5 to FIG. 11: the transceiver module 1320 is used to send the first indication information, receive an inquiry message, send a response message, receive the first RRC message/third RRC message/fifth RRC message, and send the second RRC message/fourth RRC message/sixth RRC message; the processing module 1310 can be used to perform measurement of wide beams and narrow beams, and process the received data, etc.

For a more detailed description of the above processing module 1310 and the transceiver module 1320, reference can be made to the related description in the method embodiments shown in FIG. 5 to FIG. 11.

As shown in FIG. 14, the communication apparatus 140 includes a processor 1410 and a transceiver 1420. The processor 1410 and the transceiver 1420 are coupled to each other. It can be understood that the transceiver 1420 may be a transceiver or an input/output interface. Optionally, the communication apparatus 140 may further include a memory 1430, used to store instructions executed by the processor 1410 or store input data required for the processor 1410 to run the instructions or store data generated after the processor 1410 runs the instructions.

When the communication apparatus 140 is used to implement the methods shown in FIG. 5 to FIG. 11, the processor 1410 is used to implement the functions of the above processing module 1310, and the transceiver 1420 is used to implement the functions of the above transceiver module 1320. The transceiver 1420 may be an interface chip, or may also be a separate IP module integrated in the interface chip.

When the above communication apparatus 140 is an interface chip applied to a network device, the interface chip of the network device implements the functions of the network device in the above method embodiments. That the interface chip of the network device sends data to the terminal device can be understood as that the data is first generated by other modules (such as a source data component) in the network device, and then sent by these modules to the interface chip of the network device.

When the above interface apparatus 140 is an interface chip applied to a terminal device, the interface chip of the terminal device implements the functions of the terminal device in the above method embodiments. That the interface chip of the terminal device receives data from the terminal device can be understood as that the data is first received by the interface chip of the terminal device, and then sent by the interface chip of the terminal device to a data processing component of the terminal device.

In the present application, entity A sending information to entity B may be that A directly sends to B, or may also be that A indirectly sends to B via other entities. Similarly, entity B receiving information from entity A may be that entity B directly receives the information sent by entity A, or may also be that entity B indirectly receives the information sent by entity A through other entities. Entity A and B herein may be a sending side or a receiving side, or may also be modules inside the sending side or the receiving side. The sending and receiving of data may be information interaction between the sending side and the receiving side, for example, information interaction between a source device and a destination device; the sending and receiving of data may also be information interaction between different modules within one apparatus, for example, information interaction between an interface chip on the sending side and an interface chip on the receiving side.

It can be understood that the processor in the embodiments of the present application may be a central processing unit (CPU), and may also be other general-purpose processors, a digital signal processor (DSP), an application specific integrated circuit (ASIC), a field programmable gate array (FPGA) or other programmable logic devices, transistor logic devices, hardware components, or any combination thereof. A general-purpose processor may be a microprocessor, or may also be any conventional processor.

The method steps in the embodiments of the present application may be implemented in hardware, or may also be implemented in software instructions executable by a processor. The software instructions may be composed of corresponding software modules, and the software modules may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. An exemplary storage medium is coupled to the processor, so that the processor can read information from the storage medium and can write information to the storage medium. The storage medium may also be an integral part of the processor. The processor and the storage medium may be located in an ASIC. In addition, the ASIC may be located in a base station or a terminal. The processor and the storage medium may also exist as discrete components in a base station or a terminal.

In the above embodiments, the implementation may be wholly or partially in the form of software, hardware, firmware, or any combination thereof. When implemented using software, the implementation may be wholly or partially in the form of a computer program product. The computer program product includes one or more computer programs or instructions. When the computer program or instructions are loaded and executed on a computer, the procedures or functions described in the embodiments of the present application are wholly or partially executed. The computer may be a general-purpose computer, a special-purpose computer, a computer network, a network device, a user device, or other programmable apparatus. The computer program or instructions may be stored in a computer-readable storage medium, or transmitted from one computer-readable storage medium to another computer-readable storage medium, for example, the computer program or instructions may be transmitted from a website, computer, server, or data center to another website, computer, server, or data center by wired or wireless means. The computer-readable storage medium may be any available medium that can be accessed by a computer or a data storage device such as a server or a data center integrating one or more available media. The available medium may be a magnetic medium, for example, a floppy disk, a hard disk, or a magnetic tape; may also be an optical medium, for example, a digital video disc; and may also be a semiconductor medium, for example, a solid-state drive. The computer-readable storage medium may be a volatile or non-volatile storage medium, or may include both volatile and non-volatile types of storage media.

In various embodiments of the present application, unless otherwise specified and in the absence of logical conflicts, terms and/or descriptions between different embodiments are consistent and can be cross-referenced, and technical features in different embodiments may be combined to form new embodiments according to their inherent logical relationships.

In the present application, "at least one" refers to one or more, and "a plurality of" refers to two or more. "And/or" describes an association relationship of associated objects, indicating that three relationships can exist, for example, A and/or B can indicate: the case where only A exists, the case where both A and B exist, and the case where only B exists, where A and B may be singular or plural. In the text description of the present application, the character "/" generally indicates that the preceding and following associated objects are in an "or" relationship. "Comprising at least one of A, B, and C" can indicate: comprising A; comprising B; comprising C; comprising A and B; comprising A and C; comprising B and C; and comprising A, B, and C.

It can be understood that various numerical labels involved in the embodiments of the present application are merely for distinguishing for the convenience of description, and are not used to limit the scope of the embodiments of the present application. The magnitude of the sequence numbers of the above processes does not imply the order of execution, and the execution order of the processes shall be determined by their functions and inherent logic.

## Claims

1. A beamforming method, comprising:
receiving first indication information, the first indication information being used to indicate a spatial domain basis of each subband in at least one subband in a wideband;
performing beamforming according to spatial domain bases respectively corresponding to a plurality of subbands of the wideband, the spatial domain bases respectively corresponding to the plurality of subbands being determined according to the spatial domain basis of each subband in the at least one subband.

2. The method according to claim 1, wherein the first indication information comprises an index of the spatial domain basis corresponding to each subband in the at least one subband.

3. The method according to claim 1, wherein the first indication information comprises a bitmap indicating the at least one subband and an index of the spatial domain basis corresponding to each subband in the at least one subband.

4. The method according to any one of claims 1-3, wherein before receiving the first indication information, the method further comprises:
sending second indication information, the second indication information being used to instruct a terminal device to report the index of the spatial domain basis of each subband in the at least one subband.

5. The method according to any one of claims 1-3, wherein before receiving the first indication information, the method further comprises:
sending third indication information, the third indication information being used to instruct a terminal device to report the index of the spatial domain basis corresponding to each subband in the at least one subband when determining that a subband increment corresponding to the at least one subband is greater than or equal to an increment threshold;
wherein the subband increment is a difference between indices of spatial domain bases of a first subband and a second subband in the wideband, or the subband increment is a difference between multipath angles of the first subband and the second subband in the wideband, or the subband increment is a difference between absolute values of coefficients of the first subband and the second subband in the wideband under the same angle.

6. The method according to claim 1, wherein the first indication information is used to indicate a functional relationship of the index of the spatial domain basis of the at least one subband changing with a position of the subband and parameters of the functional relationship.

7. The method according to claim 6, wherein before receiving the first indication information, the method further comprises:
sending fourth indication information, the fourth indication information being used to instruct a terminal device to report the functional relationship of the spatial domain basis of the at least one subband changing with the position of the subband and the parameters of the functional relationship.

8. The method according to any one of claims 1-7, wherein before receiving the first indication information, the method further comprises:
sending an inquiry message, the inquiry message being used to inquire whether a terminal device has a capability of reporting the index of the spatial domain basis on a per-subband basis;
receiving a response message, the response message being used to indicate that the terminal device has the capability of reporting the index of the spatial domain basis on a per-subband basis.

9. The method according to any one of claims 1-8, wherein the at least one subband comprises a subband of a center frequency point, a subband of a maximum frequency point, and a subband of a minimum frequency point in the wideband.

10. The method according to any one of claims 1-9, wherein the performing beamforming according to the spatial domain bases respectively corresponding to the plurality of subbands of the wideband comprises:
determining weights for beamforming respectively corresponding to the plurality of subbands according to the spatial domain bases respectively corresponding to the plurality of subbands;
performing beamforming according to the weight corresponding to each subband in the plurality of subbands.

11. A beamforming method, comprising:
sending first indication information, the first indication information being used to indicate a spatial domain basis of each subband in at least one subband in a wideband;
receiving a beam transmitted on the wideband, the beam being obtained by performing beamforming according to spatial domain bases respectively corresponding to a plurality of subbands of the bandwidth, the spatial domain bases respectively corresponding to the plurality of subbands being determined according to the spatial domain basis of each subband in the at least one subband.

12. The method according to claim 11, wherein the first indication information comprises an index of the spatial domain basis corresponding to each subband in the at least one subband.

13. The method according to claim 12, wherein before sending the first indication information, the method further comprises:
receiving second indication information, the second indication information being used to instruct a terminal device to report the index of the spatial domain basis of each subband in the at least one subband.

14. The method according to claim 11, wherein the first indication information comprises a bitmap indicating the at least one subband and an index of the spatial domain basis corresponding to each subband in the at least one subband.

15. The method according to claim 14, wherein before sending the first indication information, the method further comprises:
receiving third indication information, the third indication information being used to instruct a terminal device to report the index of the spatial domain basis corresponding to each subband in the at least one subband when determining that a subband increment corresponding to the at least one subband is greater than or equal to an increment threshold;
wherein the subband increment is a difference between indices of spatial domain bases of a first subband and a second subband in the wideband, or the subband increment is a difference between multipath angles of the first subband and the second subband in the wideband, or the subband increment is a difference between absolute values of coefficients of the first subband and the second subband in the wideband under the same angle.

16. The method according to claim 11, wherein the first indication information is used to indicate a functional relationship of the index of the spatial domain basis of the at least one subband changing with a position of the subband and parameters of the functional relationship.

17. The method according to claim 16, wherein before sending the first indication information, the method further comprises:
receiving fourth indication information, the fourth indication information being used to instruct a terminal device to report the functional relationship of the spatial domain basis of the at least one subband changing with the position of the subband and the parameters of the functional relationship.

18. The method according to any one of claims 11-17, wherein before sending the first indication information, the method further comprises:
receiving an inquiry message, the inquiry message being used to inquire whether a terminal device has a capability of reporting the index of the spatial domain basis on a per-subband basis;
sending a response message, the response message being used to indicate that the terminal device has the capability of reporting the index of the spatial domain basis on a per-subband basis.

19. The method according to any one of claims 11-18, wherein the at least one subband comprises a subband of a center frequency point, a subband of a maximum frequency point, and a subband of a minimum frequency point in the wideband.

20. A communication apparatus, comprising:
a receiving module, used to receive first indication information, the first indication information being used to indicate a spatial domain basis of each subband in at least one subband in a wideband;
a processing module, used to perform beamforming according to spatial domain bases respectively corresponding to a plurality of subbands of the bandwidth, the spatial domain bases respectively corresponding to the plurality of subbands being determined according to the spatial domain basis of each subband in the at least one subband.

21. A communication apparatus, comprising:
a sending module, used to send first indication information, the first indication information being used to indicate a spatial domain basis of each subband in at least one subband in a wideband;
a receiving module, used to receive a beam transmitted on the wideband, the beam being obtained by performing beamforming according to spatial domain bases respectively corresponding to a plurality of subbands of the bandwidth, the spatial domain bases respectively corresponding to the plurality of subbands being determined according to the spatial domain basis of each subband in the at least one subband.

22. A communication apparatus, wherein the communication apparatus comprises a processor and a memory, the memory being used to store computer-executable instructions, and when the computer-executable instructions are executed by the processor, the method according to any one of claims 1-19 is performed.

23. A computer-readable storage medium, wherein computer instructions are stored in the computer-readable storage medium, and when the computer instructions are run on a communication apparatus, the communication apparatus is caused to perform the method according to any one of claims 1-19.

24. A computer program product, wherein it comprises computer instructions, and when the computer instructions are run on a communication apparatus, the communication apparatus is caused to perform the method according to any one of claims 1-19.
